(19) Europäisches Patentamt
European Patent Office
Office européen des brevets

(11) **EP 2 167 950 B1**

(12) **FASCICULE DE BREVET EUROPEEN**

(45) Date de publication et mention
de la délivrance du brevet:
**13.04.2011 Bulletin 2011/15**

(21) Numéro de dépôt: **08826491.6**

(22) Date de dépôt: **12.06.2008**

(51) Int Cl.:
*G01N 27/04* $^{(2006.01)}$    *G01B 7/06* $^{(2006.01)}$
*G01N 15/06* $^{(2006.01)}$    *G01N 9/00* $^{(2006.01)}$

(86) Numéro de dépôt international:
**PCT/FR2008/000801**

(87) Numéro de publication internationale:
**WO 2009/010645 (22.01.2009 Gazette 2009/04)**

(54) **PROCEDE DE MESURE D'UNE EPAISSEUR SEUIL DE COUCHE DE MATERIAU PUREMENT RESISTIF, DISPOSITIF DE MISE EN OEUVRE, ET UTILISATION D'UN TEL DISPOSITIF DANS UN POT D'ECHAPPEMENT**

VERFAHREN ZUR MESSUNG DER SCHWELLENDICKE EINER SCHICHT AUS EINEM REIN RESISTIVEN MATERIAL, VORRICHTUNG ZUR ANWENDUNG DIESES VERFAHRENS UND VERWENDUNG BESAGTER VORRICHTUNG IN EINEM AUSPUFFROHR

METHOD FOR MEASURING THE THRESHOLD THICKNESS OF A LAYER OF A PURELY RESISTIVE MATERIAL, DEVICE FOR IMPLEMENTING SAME AND USE OF SAID DEVICE IN AN EXHAUST PIPE

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **13.06.2007 FR 0704221**

(43) Date de publication de la demande:
**31.03.2010 Bulletin 2010/13**

(73) Titulaires:
• **Centre National de la Recherche Scientifique
75016 Paris (FR)**
• **Université de Bordeaux 1
33405 Talence Cedex (FR)**
• **Institut Polytechnique de Bordeaux
33607 Pessac Cedex (FR)**

(72) Inventeurs:
• **MENIL, Françis Louis
F-33650 Saint Selve (FR)**
• **LUCAT, Claude
F-33610 Cestas (FR)**
• **TARDY, Pascal
F-33370 Fargues Saint Hilaire (FR)**
• **GUEDON, Alexandrine
F-33710 Mombrier (FR)**
• **GINET, Patrick
JP-Tokyo 153-8505, (JP)**

(74) Mandataire: **Rataboul, Xavier et al
Cabinet Orès
36, rue de St Pétersbourg
F-75008 Paris (FR)**

(56) Documents cités:
EP-A- 1 106 797    EP-A- 1 640 713
WO-A-2005/124313    WO-A-2006/111459
US-A- 4 766 369    US-A- 5 955 887

**EP 2 167 950 B1**

**Description**

L'invention se rapporte à un procédé de mesure d'une épaisseur seuil de couche de matériau purement résistif, applicable notamment aux dépôts de suie en échappement automobile. L'invention concerne également un dispositif de mise en oeuvre, et une utilisation d'un tel dispositif dans un pot d'échappement.

La diminution permanente des limites d'émissions polluantes en provenance des échappements automobiles, imposées par les normes nationales et internationales, constitue une contrainte importante pour les constructeurs automobile. La réglementation européenne Euro 4 de 2005 admet un taux de polluants maximum de 0,025 mg/km, mais la future réglementation européenne Euro 5 prévue en 2010, rabaissera ce seuil à 0,005 mg/km, ce qui imposera un recours systématique à la technologie des filtres à particules (FAP) pour tous les véhicules et dans tous les pays de l'Union. Cette réglementation va donc accroître les besoins actuels de façon conséquente.

L'amélioration des systèmes de contrôle des FAP pour une performance accrue est donc une des priorités actuelles des motoristes. Or, à ce jour, il n'existe aucun moyen sur le marché permettant de quantifier les émissions de particules de moteurs thermiques avec une fiabilité acceptable. Dans certains véhicules, les cycles de fonctionnement du moteur effectués sont mémorisés et comparés à une cartographie de fonctionnement préenregistrée. Les régénérations du FAP sont commandées par ces comparaisons. Mais, au cours de la vie du moteur, le niveau d'émission de particules est à même de dériver pour un même cycle de fonctionnement. La qualité du carburant peut également modifier les émissions. Ces dérives sont extrêmement difficiles à intégrer. Ce système est donc peu fiable et relativement coûteux.

Une autre solution consiste à prendre en compte la perte de charge (différence de pression à l'entrée et à la sortie du FAP). Cependant cette contre-pression n'est pas non plus exactement représentative du chargement en masse, puisque fortement dépendante des conditions d'accumulation et de la nature des suies, du nombre de kilomètres parcourus par le véhicule, du type de conduite, etc.

Différentes techniques ont été proposées pour la détection des particules de suie :

- la détection optique par diffusion de la lumière sur les particules ; cette solution est difficile à exploiter pour les applications moteurs en raison de l'accumulation de poussières sur les optiques et des coûts élevés car le système doit être adapté pour résister aux fortes températures ;
- la détection électronique par modification du courant d'ionisation ; cette solution est également coûteuse car elle nécessite l'utilisation de courants élevés ; et
- la mesure de l'élévation de température, générée par la combustion des suies et proportionnelle à la masse oxydée (principe de capteur catalytique) ; cette solution plus économique est néanmoins difficilement applicable dans le cas de moteurs car la température de l'environnement déjà élevée est très fluctuante.

Des techniques de mesure d'épaisseur de matériau par des mesures capacitives sont bien connues. Cependant, ces mesures capacitives ne sont envisageables que pour un matériau essentiellement capacitif, c'est-à-dire dont la résistance est négligeable par rapport à la capacité, et nécessitent un circuit de traitement complexe. De telles techniques sont connues des documents US 4 766 369 et US 5 955 887 pour détecter respectivement un dépôt de glace pure (matériau purement capacitif) ou un dépôt d'un mélange d'eau et de glace (matériau mixte dont l'impédance totale est mesurée).

S'agissant de matériaux purement résistifs, le document WO 2005/124313 décrit une méthode pour influencer le dépôt de suie sur un capteur. Ce document traite de la mesure de résistance d'un dépôt de matière purement résistive, et part du principe que pour mesurer une résistance entre les deux électrodes du capteur, une phase de dépôt minimal forcé de suie est nécessaire pour que le capteur fonctionne, c'est-à-dire pour qu'une résistance finie puisse être mesurée. Après ce dépôt, la valeur de la résistance de la couche de suie peut être suivie en fonction de l'épaisseur du dépôt. Il en découle qu'une épaisseur seuil ne peut être détectée qu'en comparant la résistance mesurée à une base de données de profils de l'évolution de la résistance en fonction de l'épaisseur. Outre le manque de précision d'une telle méthode, le capteur doit être nécessairement associé à un dispositif électronique complexe apte à effectuer des calculs importants. De plus, la technique exposée dans ce document présente l'inconvénient majeur de réaliser une mesure de résistance totalement dépendante des conditions de dépôt, telles que les fluctuations importantes de température et de débit des gaz d'échappement, et de la composition des suies qui peut fluctuer au cours de la vie du moteur. D'autre part, la phase obligatoire de dépôt forcé de suie entre les électrodes ne fournit pas de mesures représentatives du dépôt qui se fait sur le reste de la surface lors du fonctionnement du pot d'échappement.

Aucune solution simple et précise n'a donc été proposée pour détecter le dépôt d'une épaisseur seuil d'un matériau purement résistif.

La présente invention vise donc à proposer un procédé fiable, simple et précis pour détecter le dépôt d'une épaisseur seuil d'un matériau purement résistif, et permettant de fournir une réponse du capteur indépendante de la résistivité du matériau, de la température et du débit des gaz d'échappement.

Pour remédier aux inconvénients des solutions connues, la présente invention propose un procédé de mesure d'une épaisseur seuil de couche de matériau purement résistif par des mesures différentielles de résistance entre au moins trois électrodes formant au moins deux paires d'électrodes, dont la longueur et/ou la largeur et/ou la tension d'alimentation et/ou l'espacement sont ajustés en fonction de l'épaisseur de dépôt à mesurer.

A cette fin, l'invention a pour objet un procédé de mesure d'une épaisseur seuil de couche de matériau purement résistif déposée sur un capteur, ledit capteur comprenant au moins trois électrodes pour définir au moins deux paires d'électrodes disposées de manière adjacente sur un support et alimentées avec une tension définie générant un courant entre les électrodes, les paires d'électrodes différant par au moins un premier paramètre pris parmi la largeur; l'espacement, la longueur des électrodes et la tension d'alimentation de chaque paire. Dans ce procédé, au moins un deuxième desdits paramètres est ajusté pour qu'une première résistance ou une première intensité entre les électrodes de la première paire et une deuxième résistance ou une deuxième intensité entre les électrodes de la deuxième paire soient égales lorsque l'épaisseur seuil est atteinte.

De par sa nature différentielle, la mesure est indépendante des conditions expérimentales telles que température et débit du gaz dans lequel la couche est immergée. Elle est en outre indépendante de la résistivité du dépôt.

Selon d'autres modes de réalisation :

- les paires d'électrodes peuvent différer par au moins un premier paramètre pris parmi la largeur et l'espacement des électrodes, et au moins un deuxième paramètres pris parmi l'espacement, la largeur, la longueur et la tension d'alimentation des électrodes est ajusté pour qu'une première résistance ou une première intensité entre les électrodes de la première paire et une deuxième résistance ou une deuxième intensité entre les électrodes de la deuxième paire soient égales lorsque l'épaisseur seuil est atteinte ;
- une largeur et/ou un espacement de la première paire d'électrodes peuvent être tels que la dérivée du courant entre les électrodes de ladite première paire par rapport à l'épaisseur de la couche tend vers zéro lorsque l'épaisseur augmente, et une largeur et/ou un espacement de la deuxième paire d'électrodes sont tels que le courant, entre les électrodes de ladite deuxième paire, augmente sensiblement linéairement avec l'épaisseur de la couche, lorsque l'épaisseur seuil est atteinte, le procédé comprenant, en outre, les étapes consistant à :

  a) alimenter les paires d'électrodes avec une tension définie,
  b) mesurer une première résistance ou une première intensité entre les électrodes de la première paire,
  c) mesurer une deuxième résistance ou une deuxième intensité entre les électrodes de la deuxième paire,
  d) comparer les deuxième et première résistances ou les première et deuxième intensités,
  e) générer un signal lorsque lesdites résistances ou lesdites intensités sont égales, les largeurs, et/ou les longueurs, et/ou les tensions d'alimentation, et/ou les espacements des électrodes étant adaptés pour que cette égalité soit obtenue lorsque l'épaisseur seuil est atteinte ;

- la largeur des électrodes de la première paire peut être comprise entre 100 nm et 1 cm, de préférence entre 10 $\mu$m et 1 mm, typiquement de 30 $\mu$m à 250 $\mu$m, et la largeur des électrodes de la deuxième paire peut être comprise entre 500 nm et 5 cm, de préférence entre 50 $\mu$m et 5 mm, typiquement de 250 $\mu$m à 1 mm ;
- le rapport entre la largeur des électrodes de la première paire et la largeur des électrodes de la deuxième paire peut être compris entre 1 : 1000 et 10 :1, de préférence entre 1 : 100 et 1 : 1, typiquement de 1 : 10à1 :2;
- l'espacement des électrodes de la première paire peut être compris entre 100 nm et 1 cm, de préférence entre 10 $\mu$m et 1 mm, typiquement de 30 $\mu$m à 250 $\mu$m, et l'espacement des électrodes de la deuxième paire peut être compris entre 500 nm et 5 cm, de préférence entre 50 $\mu$m et 5 mm, typiquement de 250 $\mu$m à 1 mm.
- le rapport entre le premier et le deuxième espacement peut être compris entre 1 : 1000 et 1 : 1, de préférence entre 1 : 100 et 1 : 2, typiquement de 1 : 10 à 1 : 3 ;
- les électrodes de la deuxième paire peuvent présenter une longueur différente de la longueur des électrodes de la première paire ;
- les électrodes de la deuxième paire peuvent être alimentées par une tension différente de la tension d'alimentation des électrodes de la première paire ; et/ou
- le procédé peut comprendre, en outre, une étape de nettoyage du capteur au moyen d'une résistance chauffante disposée sur le support de manière à assurer une combustion totale du dépôt de matière résistive.

L'invention se rapporte également à un procédé de dimensionnement d'un dispositif de détection d'une épaisseur seuil d'une couche de matériau purement résistif déposée sur des électrodes du dispositif, pour la mise en oeuvre du procédé précédent. Il comprend les étapes suivantes :

$\alpha$) déposer une épaisseur seuil choisie de matériau purement résistif sur une première et une deuxième paire d'électrodes expérimentales, reliées à une source de tension, et différant par un premier paramètre pris parmi la largeur et l'espacement des électrodes ;

β) mesurer les intensités ou les résistances, à l'épaisseur seuil choisie, pour chaque paire d'électrodes expérimentales et calculer le rapport des intensités ou le rapport des résistances entre les électrodes de chaque paire ;

γ) fabriquer un capteur comprenant deux paires d'électrodes différant par le même premier paramètre que les électrodes expérimentales et par au moins un deuxième paramètre pris parmi la longueur et la tension d'alimentation des électrodes, ce deuxième paramètre différant selon un rapport égal au rapport des intensités ou au rapport des résistances, mesurées à l'épaisseur seuil à l'étape β) précédente, entre les paires d'électrodes expérimentales.

Selon d'autres modes de réalisation :

- lors de l'étape α), les première et deuxième paires d'électrodes expérimentales peuvent présenter respectivement une première et deuxième largeur, mais sont de longueurs, d'espacements et de tensions d'alimentation identiques ; et lors de l'étape γ), un capteur est fabriqué, comprenant deux paires d'électrodes présentant respectivement les mêmes première et deuxième largeurs que celles des électrodes expérimentales, des espacements identiques, et dans lequel le rapport entre la longueur des électrodes de la deuxième et de la première paire, ou le rapport entre la tension appliquée, en utilisation, aux bornes des électrodes de la deuxième et de la première paire, est égal au rapport des intensités ou des résistances, mesurées à l'épaisseur seuil choisie à l'étape β) antérieure, entre les paires d'électrodes expérimentales ;
- lors de l'étape α), les première et deuxième paires d'électrodes expérimentales peuvent présenter respectivement un premier et deuxième espacement, mais sont de longueurs, de largeurs et de tensions d'alimentation identiques ; et lors de l'étape γ) un capteur est fabriqué, comprenant deux paires d'électrodes présentant respectivement les mêmes premier et deuxième espacements que ceux des électrodes expérimentales, des largeurs identiques, et dans lequel le rapport entre la longueur des électrodes de la deuxième et de la première paire, ou le rapport entre la tension appliquée, en utilisation, aux bornes des électrodes de la deuxième et de la première paire, est égal au rapport des intensités ou des résistances, mesurées à l'épaisseur seuil choisie à l'étape β) antérieure, entre les paires d'électrodes expérimentales ;
- lors de l'étape α) les première et deuxième paires d'électrodes expérimentales, diffèrent par la largeur et l'espacement des électrodes, les électrodes étant de longueurs et de tensions d'alimentation identiques ; et lors de l'étape y) un capteur est fabriqué, comprenant deux paires d'électrodes présentant les mêmes largeurs et espacements que les électrodes expérimentales, et dans lequel le rapport entre la longueur des électrodes de la deuxième et de la première paire, ou le rapport entre la tension appliquée, en utilisation, aux bornes des électrodes de la deuxième et de la première paire, est égal au rapport des intensités ou des résistances, mesurées à l'épaisseur seuil choisie à l'étape β) antérieure, entre les paires d'électrodes expérimentales.

L'invention se rapporte également à un dispositif de détection d'une épaisseur seuil d'une couche de matériau purement résistif, pour la mise en oeuvre du procédé de mesure précédent, comprenant un capteur muni d'au moins trois électrodes pour définir au moins deux paires d'électrodes disposées de manière adjacente sur un support, une source de tension reliée aux électrodes et réglée pour délivrer une tension entre chaque paire d'électrodes, et un moyen de mesure des résistances ou des intensités entre les paires d'électrodes. Le dispositif comprend, en outre, un moyen de comparaison des résistances ou des intensités entre elles et un moyen de génération d'un signal quant les résistances ou les intensités mesurées sont égales. Les paires d'électrodes diffèrent par au moins un premier paramètre pris parmi la largeur et l'espacement des électrodes, et au moins un deuxième paramètres pris parmi l'espacement, la largeur, la longueur et le réglage de la source de tension d'alimentation des électrodes, le deuxième paramètre étant tel que, en utilisation, l'égalité de résistance ou d'intensité est obtenue lorsque l'épaisseur seuil à détecter est déposée sur les électrodes.

Selon d'autres modes de réalisation :

- une largeur et/ou un premier espacement de la première paire d'électrodes peuvent être tels que, en utilisation, la dérivée du courant entre les électrodes de ladite première paire par rapport à l'épaisseur de la couche tend vers zéro lorsque l'épaisseur augmente, et une largeur et/ou un deuxième espacement de la deuxième paire d'électrodes sont tels que, en utilisation, le courant entre les électrodes de ladite deuxième paire, augmente sensiblement linéairement avec l'épaisseur de la couche, lorsque l'épaisseur seuil est atteinte, les largeurs et/ou les longueurs et/ou les espacements des électrodes et/ou le réglage de la source de tension d'alimentation étant adaptés pour que l'égalité de résistance ou d'intensité soit obtenue lorsque l'épaisseur seuil est atteinte ;
- un cache en matière isolante peut être disposé sur les électrodes de manière à ne laisser en contact électrique avec la couche de matériau résistif qu'une longueur d'électrode déterminée ;

- les électrodes peuvent être disposées de manière parallèle, interdigitée ou mixte ;
- le dispositif de détection peut être obtenu par le procédé de dimensionnement précédent, et comprendre deux paires d'électrodes présentant respectivement les mêmes première et deuxième largeurs que celles des électrodes expérimentales, des espacements identiques, et dans lequel le rapport entre la longueur des électrodes de la deuxième et de la première paire, ou le rapport entre la tension appliquée, en utilisation, aux bornes des électrodes de la deuxième et de la première paire, est égal au rapport des intensités ou des résistances, mesurées à l'épaisseur seuil choisie à l'étape β) du procédé de dimensionnement, entre les paires d'électrodes expérimentales ;
- le dispositif de détection peut être obtenu par le procédé de dimensionnement précédent, et comprendre deux paires d'électrodes présentant respectivement les mêmes premier et deuxième espacements que ceux des électrodes expérimentales, des largeurs identiques, et dans lequel le rapport entre la longueur des électrodes de la deuxième et de la première paire, ou le rapport entre la tension appliquée, en utilisation, aux bornes des électrodes de la deuxième et de la première paire, est égal au rapport des intensités ou des résistances, mesurées à l'épaisseur seuil choisie à l'étape β) du procédé de dimensionnement, entre les paires d'électrodes expérimentales ;
- le dispositif de détection peut être obtenu par le procédé de dimensionnement précédent, et comprendre deux paires d'électrodes présentant les mêmes largeurs et espacements que les électrodes expérimentales, et dans lequel le rapport entre la longueur des électrodes de la deuxième et de la première paire, ou le rapport entre la tension appliquée, en utilisation, aux bornes des électrodes de la deuxième et de la première paire, est égal au rapport des intensités ou des résistances, mesurées à l'épaisseur seuil choisie à l'étape β) du procédé de dimensionnement, entre les paires d'électrodes expérimentales.

L'invention se rapporte également à une utilisation du procédé de mesure précédent pour détecter le dépôt d'une épaisseur seuil de couche de suie dans un pot d'échappement. Au cours de cette utilisation, le signal généré à l'étape e), lorsque la première et la deuxième résistance ou intensité sont égales peut consister à commander une étape de régénération de filtre à particules.

Enfin, l'invention se rapporte à un pot d'échappement muni d'un filtre à particules, comprenant au moins un dispositif de détection précédent disposé en amont du filtre à particules pour la mise en oeuvre du procédé de mesure précédent. Le pot d'échappement peut également comprendre, en outre, au moins un dispositif de détection précédent disposé en aval du filtre à particules.

D'autres caractéristiques de l'invention seront énoncées dans la description détaillée ci-après faite en référence aux figures annexées qui représentent, respectivement :

- la figure 1, une vue schématique en coupe d'un dispositif de détection selon l'invention ;
- la figure 2, un diagramme général et un agrandissement d'un détail A de ce diagramme, illustrant l'influence de la largeur des électrodes, à espacement constant, sur l'évolution de l'intensité entre les électrodes en fonction de l'épaisseur de dépôt ;
- la figure 3, un diagramme général et un agrandissement d'un détail B de ce diagramme, illustrant l'influence de l'espacement des électrodes, à largeur constante, sur l'évolution de l'intensité entre les électrodes en fonction de l'épaisseur de dépôt ;
- la figure 4, un diagramme illustrant un mode de réalisation du procédé selon l'invention, consistant à adapter, pour des paires d'électrodes de largeurs différentes et d'espacement identique, la longueur d'une des paires en fonction de l'épaisseur seuil à déterminer ;
- la figure 5, un diagramme général et un agrandissement d'un détail D de ce diagramme, illustrant l'influence des valeurs de largeur et d'espacement des électrodes, pour un rapport largeur/espacement égal à 1, sur l'évolution de l'intensité en fonction de l'épaisseur de dépôt ;
- les figures 5a et 5b, des diagrammes illustrant deux modes de réalisation du procédé selon l'invention, consistant à adapter, pour des paires d'électrodes de largeurs et d'espacements différents mais de rapport largeur/espacement égal à un, la longueur d'une des paires en fonction de l'épaisseur seuil à déterminer ;
- la figure 6, un diagramme illustrant l'évolution du courant entre deux électrodes du dispositif selon l'invention en fonction de l'épaisseur de la couche de matériau purement résistif déposé ;
- les figures 7 et 8, des vues schématiques de dessus d'un capteur selon l'invention, avant et après un dimensionnement des électrodes ;
- les figures 9 à 12, des vues schématiques de dessus de capteurs selon l'invention, présentant des géométries d'électrodes différentes ; et
- la figure 13, une vue schématique en coupe d'un dispositif de mise en oeuvre d'un procédé selon l'invention pour la mesure directe des résistivités d'une couche de matériau.

Le procédé de mesure d'une épaisseur seuil de matériau purement résistif selon l'invention propose une mesure différentielle de résistance ou une mesure différentielle d'intensités de la couche de matériau purement résistif entre deux paires d'électrodes disposées sur un support isolant. L'expression « deux paires d'électrodes » doit être comprise dans un sens fonctionnel et non structurel, c'est-à-dire que les mesures peuvent être effectuées entre deux paires d'électrodes obtenues avec trois électrodes physiques, l'une des électrodes appartenant aux deux paires d'électrodes.

Le procédé s'applique essentiellement aux matériaux conducteurs ou semi-conducteurs électroniques, par opposition aux diélectriques.

Les paires d'électrodes sont caractérisées par la hauteur, la largeur, la longueur et l'espacement des électrodes. Dans la suite du texte, la hauteur de toutes les électrodes est considérée comme identique et négligeable par rapport à l'épaisseur seuil à détecter.

Pour obtenir une mesure différentielle de résistance ou d'intensité, les largeurs et/ou longueurs et/ou tensions et/ou espacements sont optimisés par rapport à l'épaisseur seuil de la couche à déterminer.

Ainsi, un dispositif de détection selon l'invention comprend un capteur muni d'au moins trois électrodes pour définir au moins deux paires d'électrodes disposées de manière adjacente sur un support. Il comprend également une source de tension reliée aux électrodes et réglée pour délivrer une tension d'alimentation entre chaque paire d'électrodes. Le réglage de la source de tension permet d'alimenter les paires d'électrodes avec une même ension ou avec des tensions différentes.

La tension génère un courant entre les électrodes de chaque paire lorsque du matériau résistif est déposé sur les électrodes. Le capteur comprend également un moyen de mesure des résistances ou des intensités entre les paires d'électrodes, un moyen de comparaison des résistances ou des intensités entre elles et un moyen de génération d'un signal quand les résistances ou les intensités mesurées sont égales. Selon l'invention, les paires d'électrodes diffèrent par au moins un premier paramètre pris parmi la largeur et l'espacement des électrodes, et au moins un deuxième paramètre pris parmi l'espacement, la largeur, la longueur et le réglage de la source de tension d'alimentation des électrodes. Le deuxième paramètre est tel que, en utilisation, l'égalité de résistance ou d'intensité est obtenue lorsque l'épaisseur seuil à détecter est déposée sur les électrodes.

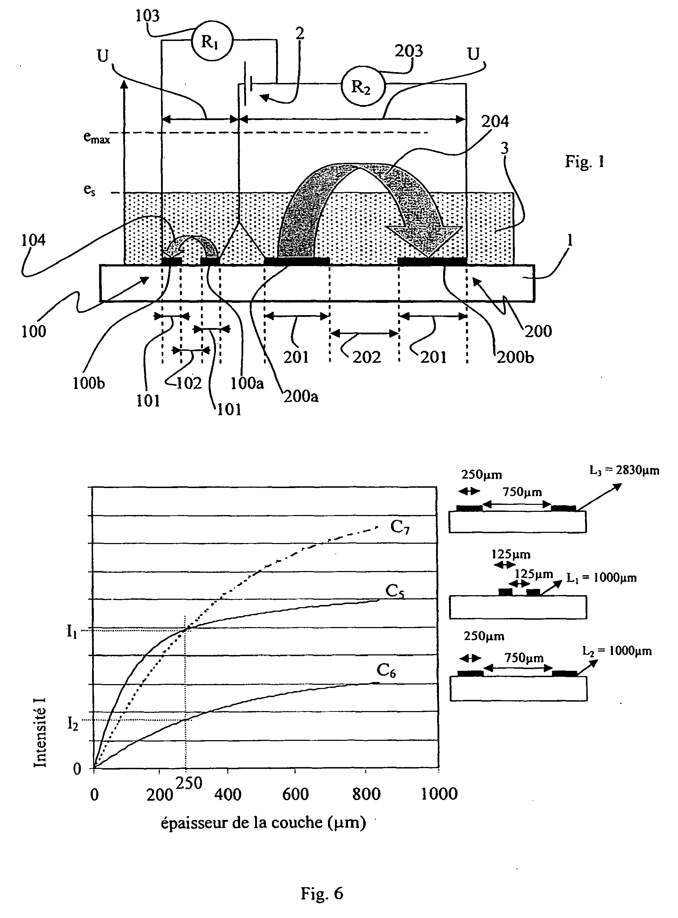

Ainsi, le schéma de la figure 1 représente un dispositif de détection d'une épaisseur seuil d'un matériau purement résistif comprenant un capteur muni de deux paires d'électrodes 100 et 200, de largeur 101, 201 et d'espacement 102, 202 différents, déposées de manière adjacentes sur un support 1. Une borne d'une électrode 100a, 200a de chaque paire 100, 200 est reliée à un générateur 2 réglé pour délivrer une tension U définie, et une borne de l'autre électrode 100b, 200b de chaque paire 100, 200 à un moyen de mesure de résistance 103, 203. Ce moyen de mesure peut être un ohmmètre ou un ampèremètre mesurant l'intensité du courant passant entre les électrodes, la résistance étant alors obtenue par la loi d'Ohm. Le dispositif comprend, en outre, un moyen de comparaison (non représenté) des résistances ou des intensités entre elles et un moyen de génération (non représenté) d'un signal quand les résistances ou les intensités mesurées sont égales.

Les largeurs 101, 201 et/ou espacements 102, 202 sont choisies pour que, d'une part, les lignes de champ électrique 104 résultant de l'application d'une tension entre les deux électrodes 100a, 100b de la première paire d'électrodes 100 restent majoritairement confinées à l'intérieur de la couche de matériau purement résistif 3 et, d'autre part, pour qu'au moins une partie des lignes de champ électrique 204 résultant de l'application d'une tension entre les électrodes 200a, 200b de la deuxième paire 200 restent à l'extérieur de la couche de matériau 3 lorsque l'épaisseur de cette couche a atteint l'épaisseur seuil $e_s$ à détecter.

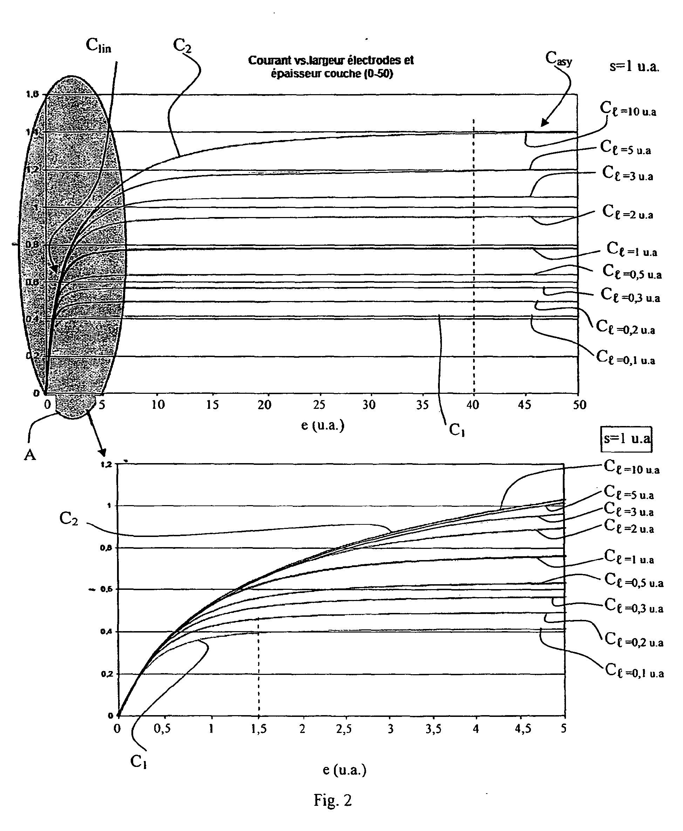

Ainsi, tant qu'une partie des lignes de champ électrique restent à l'extérieur de la couche de matériau 3, le courant augmente sensiblement linéairement avec l'épaisseur de la couche. Cette évolution est illustrée sur les courbes des figures 2, 3 et 5 par la partie sensiblement linéaire $C_{lin}$ de chaque courbe.

Mais, au fur et à mesure que l'épaisseur de dépôt augmente de telle sorte que les lignes de champ électrique entre deux électrodes restent majoritairement confinées à l'intérieur de la couche de matériau, la dérivée du courant par rapport à l'épaisseur dl/de tend vers zéro. Cette évolution est illustrée sur les figures 2, 3 et 5 par la partie asymptotique $C_{asy}$ de chaque courbe.

Il suffit de faire varier un seul des paramètres largeur des électrodes ou leur espacement pour obtenir des courbes présentant des allures distinctes traduisant le fait que la première paire d'électrodes développe le caractère asymptotique avant la deuxième paire.

De préférence, pour obtenir des résultats précis tout en limitant l'encombrement des électrodes et la quantité de matière utilisée, la variation dudit paramètre est choisie pour d'une part, que la première paire d'électrodes arrive à saturation avant le dépôt de l'épaisseur seuil, c'est-à-dire que les lignes de champ électrique résultant de l'application d'une tension entre les deux électrodes restent majoritairement confinées à l'intérieur de la couche de matériau purement résistif et, d'autre part, que la deuxième paire d'électrodes arrive à saturation après le dépôt de l'épaisseur seuil, c'est-à-dire qu'au moins une partie des lignes de champ électrique résultant de l'application d'une tension entre les électrodes restent à l'extérieur de la couche de matériau lorsque l'épaisseur de cette couche a atteint l'épaisseur seuil $e_s$ à détecter.

Ainsi, la figure 2 illustre l'influence de la largeur «$\ell$» des électrodes sur la courbe représentant l'évolution de l'intensité I entre les électrodes en fonction de l'épaisseur e de dépôt. La largeur $\ell$, l'espacement s et l'épaisseur du dépôt e sont exprimés dans la même unité arbitraire (u.a). La longueur L, l'espacement s et la tension U restent constants.

Cette figure 2 et l'agrandissement du détail A (graphique inférieur de la figure 2) montrent que plus la largeur des électrodes diminue, plus la saturation intervient à une épaisseur e faible. Ainsi, une paire dont les électrodes ont une largeur de 0,1 u.a (courbe C1 la plus en bas de chaque graphique) atteint son intensité asymptotique (environ 0,4 u.a) à une épaisseur d'environ 1,5 u.a (agrandissement du détail A), alors qu'une paire dont les électrodes ont une largeur de 10 u.a (la courbe C2 la plus en haut de chaque graphique) atteint son intensité asymptotique (environ 1,4 u.a) à une épaisseur d'environ 40 u.a.

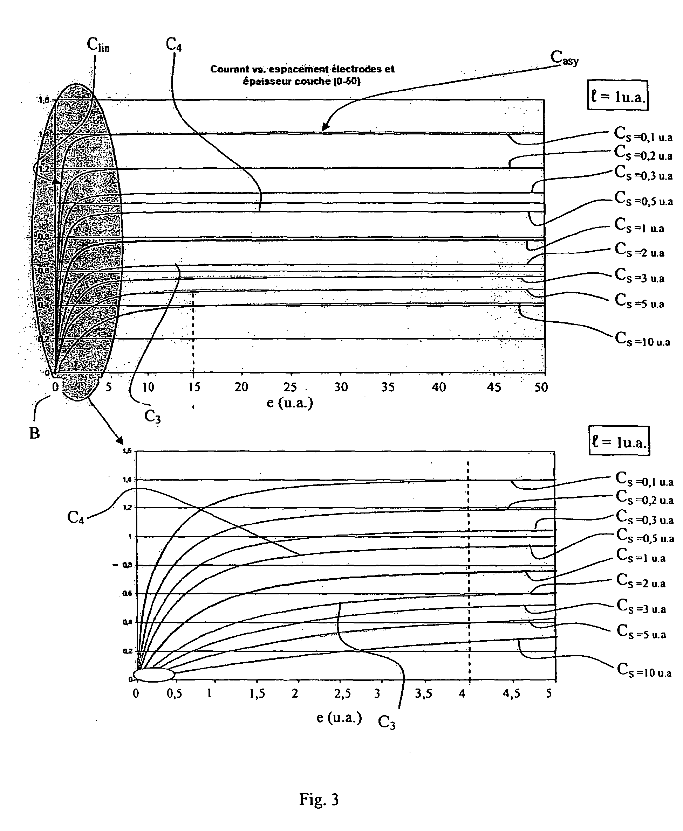

La figure 3 illustre l'influence de l'espacement des électrodes sur la courbe représentant l'évolution de l'intensité entre les électrodes en fonction de l'épaisseur de dépôt. La largeur $\ell$, l'espacement s et l'épaisseur du dépôt e sont exprimées dans la même unité arbitraire (u.a). La longueur, la largeur et la tension restent constantes. Cette figure 3, et l'agrandissement du détail B (graphique inférieur de la figure 3) montrent que plus l'espacement des électrodes diminue, plus la saturation intervient à une épaisseur e faible. Ainsi, une paire dont les électrodes sont espacées de 10 u.a (courbe la plus en bas de chaque graphique) atteint son intensité asymptotique (environ 0,4 u.a) à une épaisseur d'environ 15 u.a, alors qu'une paire dont les électrodes sont espacées de 0,1 u.a (la courbe la plus en haut de chaque graphique) atteint son intensité asymptotique (environ 1,4 u.a) à une épaisseur d'environ 4 u.a (agrandissement du détail B).

Ces deux figures montrent qu'en disposant de deux paires d'électrodes différant par leur largeur ou leur espacement, il est possible de dimensionner les électrodes pour que les lignes de champ électrique résultant de l'application d'une tension entre les électrodes de la première paire restent en proportion davantage confinées à l'intérieur de la couche de matériau purement résistif que celles résultant de l'application d'une tension entre les électrodes de la deuxième paire lorsque l'épaisseur seuil est atteinte. Cependant, les courbes présentées ne se croisent pas.

Selon l'invention, il convient de faire varier au moins deux paramètres, lors de la phase de dimensionnement du capteur, de manière à ce que les courbes représentant l'évolution de l'intensité entre les électrodes en fonction de l'épaisseur de dépôt se croisent à l'épaisseur seuil à détecter. Autrement dit, il convient de choisir de manière adaptée ces paramètres (longueur, largeur, espacement, tension d'alimentation), pour que les intensités ou résistances mesurées entre chaque paire d'électrodes soient égales lorsque l'épaisseur de la couche de dépôt a atteint l'épaisseur seuil $e_s$ à détecter.

Selon un premier mode de réalisation, le procédé de mesure selon l'invention consiste à adapter la longueur des électrodes en fonction de l'épaisseur seuil à déterminer et, plus précisément à augmenter la longueur de la paire d'électrodes la plus espacée ou la tension aux bornes de cette paire, ou bien à diminuer la longueur des électrodes de la paire la moins espacée ou la tension aux bornes de cette paire, le tout selon un facteur déterminé.

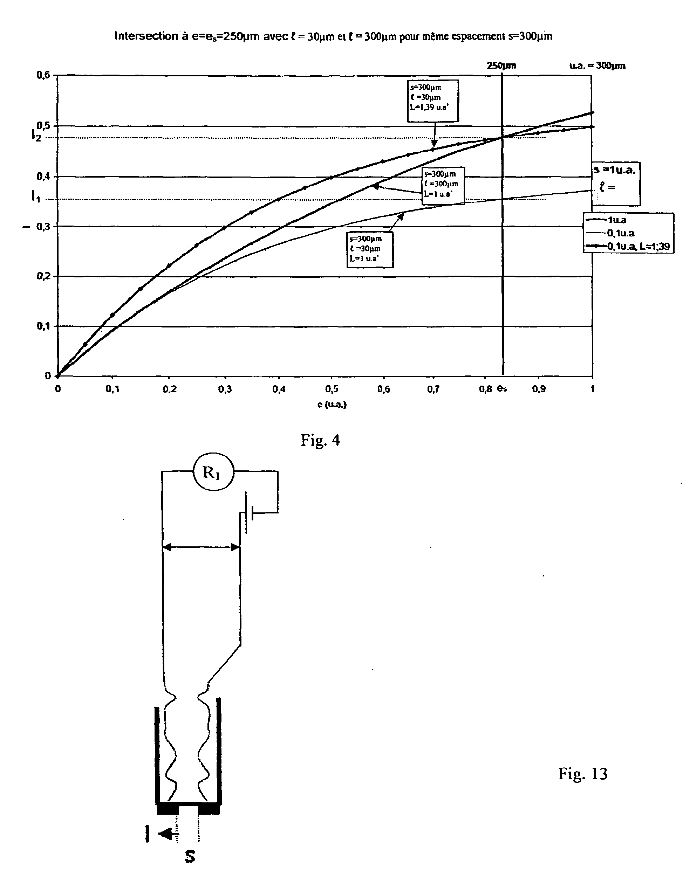

La figure 4 illustre ce mode de réalisation appliqué au cas décrit en référence à la figure 2. Ainsi, deux paires d'électrodes expérimentales présentent un espacement identique de 1 u.a, mais des électrodes de largeur différentes. Dans l'exemple illustré en figure 4, la première paire d'électrodes présente une largeur $\ell$ de 0,1 u.a et la deuxième paire d'électrodes présente une largeur t de 1 u.a. Plus précisément, la première paire présente des électrodes de 30 $\mu$m de largeur, espacées de 300 $\mu$m et d'une longueur arbitraire de 1 u.a' (u.a' est une longueur unitaire pour la longueur des électrodes, pas nécessairement égale à la longueur unitaire u.a utilisée pour les autres dimensions, largeur et espacement des électrodes ainsi qu'épaisseur de couche). La deuxième paire présente des électrodes de 300 $\mu$m de largeur, espacées de 300 $\mu$m et d'une longueur arbitraire de 1 u.a'.

L'invention consiste, dans un premier temps, à calculer le rapport $I_2/I_1$ des intensités mesurées, à l'épaisseur seuil $e_s$ choisie de 250$\mu$m, pour chaque paire d'électrodes. Sur la figure 4, ce rapport est égal à 1,39. Puis le procédé selon l'invention consiste à multiplier la longueur des électrodes de la première paire par ce rapport pour obtenir un capteur apte à mettre en oeuvre le procédé de mesure selon l'invention. Ainsi, lorsque les intensités mesurées entre les deux paires d'électrodes ainsi dimensionnées sont égales, le dispositif génère un signal signifiant qu'une épaisseur seuil de matériau s'est déposée sur le capteur.

De manière équivalente, à la place de la longueur, la tension appliquée aux bornes de la première paire d'électrodes aurait pu être multipliée par le rapport mesuré.

De manière également équivalente, au lieu de multiplier la longueur ou la tension d'alimentation de la première paire par ledit rapport, il est également possible de diviser la longueur ou la tension d'alimentation de la deuxième paire par ledit rapport.

La même procédure est applicable pour le cas décrit en référence à la figure 3.

Cependant, il convient de constater que la comparaison avec la figure 2 indique qu'une plus grande latitude dans le dimensionnement des électrodes ainsi qu'une meilleure précision au croisement des courants peuvent être obtenues en jouant sur l'espacement des électrodes plutôt que sur leur largeur car, dans ce dernier cas, les courbes sont plus groupées dans la partie non asymptotique. Autrement dit, la largeur des électrodes a une influence moins importante que l'espacement entre les électrodes de chaque paire.

Selon un deuxième mode de réalisation, au lieu d'adapter la longueur ou la tension, le procédé de mesure selon l'invention consiste à adapter la largeur ou l'espacement des électrodes en fonction de l'épaisseur seuil à déterminer.

Autrement dit, lorsque les paires d'électrodes expérimentales ont des électrodes de largeurs identiques et ne diffèrent que par leur espacement, le procédé selon le deuxième mode de réalisation consiste à n'adapter que la largeur des électrodes du capteur pour que les courbes se croisent à l'épaisseur seuil. De même, lorsque les paires d'électrodes expérimentales sont d'espacements identiques et ne diffèrent que par la largeur des électrodes, le procédé selon le deuxième mode de réalisation consiste à n'adapter que l'espacement des électrodes du capteur pour que les courbes se croisent à l'épaisseur seuil.

Ainsi, les paires d'électrodes du capteur ne diffèrent que par la largeur et l'espacement des électrodes.

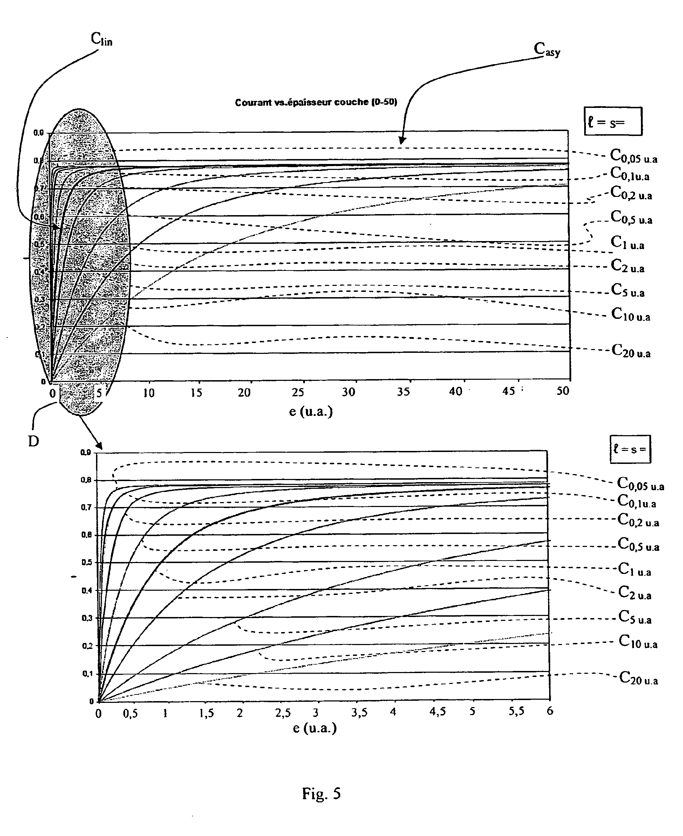

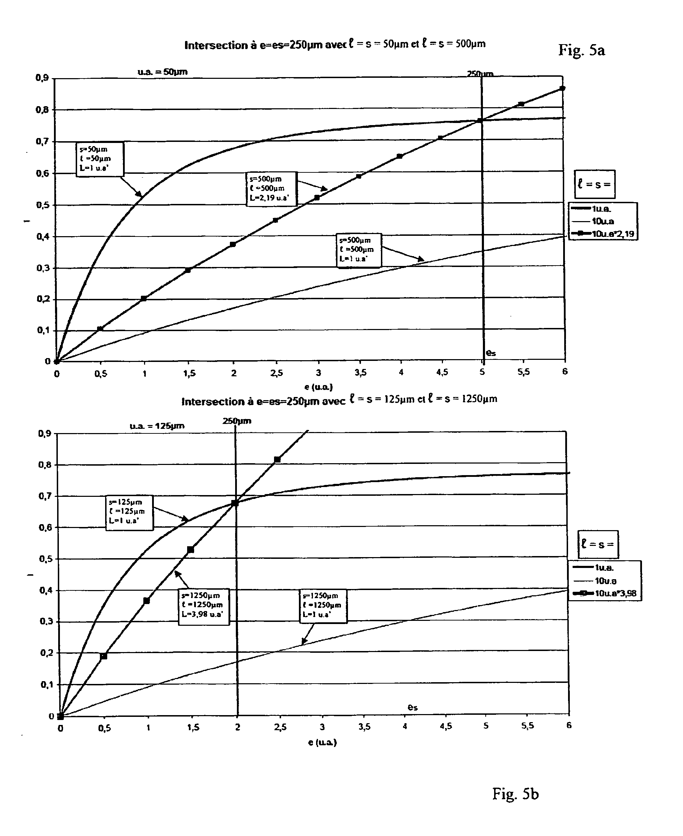

Cependant, comme le montre la figure 5, illustrant le cas d'un rapport s/l égal à un, il est impossible que les courbes représentatives de l'évolution de l'intensité I en fonction de l'épaisseur e de dépôt se croisent si les deux paires présentent respectivement des électrodes dont la largeur est égale à l'espacement s (par exemple : $\ell$ = s = 0,05 u.a pour la première paire et $\ell$ = s = 2 u.a pour la deuxième), parce que les courbes tendent toutes vers la même asymptote.

Donc, lorsque les paires d'électrodes ne diffèrent que par la largeur et l'espacement des électrodes, il est nécessaire que les deux paires d'électrodes présentent également un rapport s/$\ell$ différent.

Le dimensionnement de la largeur et de l'espacement des électrodes peut être obtenu par simulation analytique dans un tableur afin de tracer la courbe 1 = f(e).

Pour cela, on pose :

$$k = tanh[\pi s/4e] \, / \, tanh[\pi(s+2\ell)/4e] \qquad [1]$$

$$k' = (1-k^2)^{1/2} \qquad [2]$$

et

$$K(k) = (\pi/2)\{1 + [(1/2)]^2 k^2 + [(1.3) /(2.4)]^2 k^4 + [(1.3.5) /(2.4.6)]^2 k^6 + ......\}$$

$$[3]$$

Alors :

$$I = \tfrac{1}{2} \, K(k')/K(k) \qquad [4]$$

Une bonne approximation de I est donnée par l'équation suivante :

$$I = (\pi/2)\{ln[2(1+k^{0,5})/(1-k^{0,5})]\}^{-1} \, pour \, k^2 \geq 0,5 \qquad [5]$$

et

$$I = (1/2\pi) \, ln[2\{1+(1-k^2)^{0,25}\}/\{1-(1-k^2)^{0,25}\}] \, pour \, k^2 \leq 0,5 \qquad [6]$$

Puis la courbe I = f(e) est représentée.

Ainsi, on fait varier $\ell$ et s pour différentes valeurs de e. Il est alors possible de déterminer les couples s et $\ell$ qui permettent un croisement des courbes à l'épaisseur seuil choisie.

Exemple 1 : croisement des deux courbes C1 et C2 de la figure 2 en modifiant l'espacement d'une des paires d'électrodes expérimentales.

L'objectif est de déterminer l'espacement de la première paire d'électrodes expérimentales tout en lui conservant sa largeur $\ell_1$ = 0,1ua et en gardant la deuxième paire inchangée ($s_2$=1ua, $\ell_2$=10ua), pour que les deux courants se coupent à $e_s$= 2ua.

L'expression du courant dans un milieu d'épaisseur e finie pour des électrodes expérimentales coplanaires est donnée par les formules [1] à [6].

Pour e = $e_s$, les deux courants doivent être égaux, ce qui implique que $k_1 = k_2 = k_S$. L'application de la formule [1] à la deuxième paire d'électrodes donne :

$$k_S = k_2 = tanh\ [\pi*1/(4*2)]\ /\ tanh\ [\pi(1+2*10)/(4*2)]\ =\ 0,374$$

Puisque $k_1 = k_S$, l'application de la formule [1] à la première paire d'électrodes conduit à :

$$tanh[\pi*s_1/(4*2)]\ =\ 0,374*\ tanh[\pi(s_1+2*0,1)/(4*2)]$$

En entrant les deux membres de l'égalité dans un tableur et en incrémentant $s_1$, l'égalité de courant I se produit pour $s_1 \approx 0,12$.

Exemple 2 : croisement des deux courbes C3 et C4 de la figure 3 en modifiant la largeur d'une des paires d'électrodes expérimentales.

L'objectif est de déterminer la largeur $\ell_1$ de la première paire d'électrodes tout en conservant son espacement $s_1 = 0,5ua$ et en gardant la deuxième paire inchangée ($s_2 = 2ua$, $\ell_2 = 1ua$), pour que les deux courants se coupent à $e_s = 2ua$.

Un calcul analogue à celui de l'exemple 1 conduit pour la deuxième paire d'électrodes à :

$$k_S = k_2 = tanh[\pi*2/(4*2)]\ /\ tanh[\pi(2+2*1)/(4*2)]\ =\ 0,715$$

Puisque $k_1 = k_s$, il en résulte pour la première paire d'électrodes :

$$tanh[\pi*0,5/(4*2)]\ =\ 0,715*\ tanh[\pi(0,5+2*\ \ell_1)/(4*2)]$$

En entrant les deux membres de l'égalité dans un tableur et en incrémentant $\ell_1$, l'égalité de courant I se produit pour $\ell_1 \approx 0,105$.

La variation de deux paramètres pour faire croiser les courbes de chaque paire d'électrodes expérimentales à l'épaisseur seuil choisie peut être suffisante pour certaine valeur d'épaisseur seuil, mais difficile, voire impossible, à mettre en oeuvre pour d'autres valeurs d'épaisseur seuil.

Un mode de réalisation préféré de l'invention, plus facile à mettre en oeuvre, consiste à faire varier au moins trois paramètres. Ainsi, en faisant varier, dans un premier temps, deux paramètres (par exemple largeur $\ell$ et espacement s), on obtient deux courbes qui présentent des allures bien distinctes traduisant le fait que la première paire d'électrodes développe le caractère asymptotique avant la deuxième paire. Dans un deuxième temps, un troisième paramètre est ajusté (par exemple en augmentant la longueur de la paire d'électrodes la plus espacée ou la tension au borne de cette paire, ou bien en diminuant la longueur des électrodes de la paire la moins espacée ou la tension au borne de cette paire) pour que les courbes se croisent précisément à l'épaisseur seuil choisie. Ce mode de réalisation permet d'éviter la mise en oeuvre de dimensions trop différentes pour les deux paires d'électrodes, pas toujours compatible avec la technologie utilisée et/ou l'application envisagée. Il permet globalement d'améliorer la précision de détection. Un exemple est illustré en figure 6.

Comme expliqué précédemment, le procédé de détection d'une épaisseur seuil selon l'invention est basé sur l'évolution du rapport $I_1/I_2$, donc, si les tensions d'alimentation sont identiques, sur celle du rapport des deux résistances $R_2/R_1$ avec l'épaisseur de la couche. De manière strictement équivalente, les différences $I_1-I_2$ ou $R_2-R_1$ peuvent également être mesurées.

Les meilleurs résultats sont obtenus pour des gammes d'espacement et/ou de largeur et/ou de longueur et/ou de tension dans lesquelles le courant circulant entre la première paire d'électrodes, lorsque l'épaisseur seuil $e_s$ est atteinte, se situe dans le domaine asymptotique de la courbe C5, alors que le courant circulant entre la deuxième paire d'électrodes, lorsque l'épaisseur seuil $e_s$ est atteinte, se situe dans le domaine sensiblement linéaire de la courbe C6. Cependant, lorsque l'espacement est égal à la largeur pour chaque paire d'électrodes (figures 5, 5a et 5b), le choix de $s = \ell$ de part et d'autre de l'épaisseur seuil n'est pas impératif, même s'il est préférable.

D'une manière générale, il convient de choisir des dimensions des paires d'électrodes relativement éloignées afin d'obtenir un « angle » suffisamment important entre les courbes représentatives des deux courants (plus exactement les tangentes à chaque courbe) pour obtenir un croisement précis.

Selon le mode de réalisation illustré en figure 6, un procédé de mesure selon l'invention consiste à adapter la longueur des électrodes en fonction de l'épaisseur seuil à détecter et des largeurs et espacements des électrodes.

L'épaisseur seuil $e_s$ à détecter est de 250 $\mu$m de particules résistives de suie. La première paire d'électrodes expérimentale présente des électrodes de largeur 101 de 125 $\mu$m et un espacement 102 également de 125 $\mu$m. La deuxième paire d'électrodes expérimentale présente des électrodes de largeur 201 de 250 $\mu$m et un espacement 202 de 750 $\mu$m.

Les deux courbes C5 et C6 représentent, pour cet exemple, les résultats d'expérimentations pour déterminer le dimensionnement des électrodes de la deuxième paire 200. Cette phase de dimensionnement est réalisée avec deux paires d'électrodes expérimentales sur support isolant. L'épaisseur de toutes les électrodes a été fixée à 10 $\mu$m et leur longueur à 1000 $\mu$m. Ces courbes peuvent être également obtenues par simulation analytique en utilisant les équations [1] à [6] décrites précédemment, ou par simulation numérique par éléments finis.

Une fois que les électrodes ont été disposées sur le support isolant, du matériau résistif est déposé par couches successives et le courant, donc la résistance, est mesuré aux bornes de chaque paire d'électrodes en fonction de l'épaisseur totale de matériau déposée, jusqu'à ce qu'une épaisseur totale maximale $e_{max}$ (figure 1) prédéterminée, supérieure à la valeur de l'épaisseur seuil à détecter, ait été déposée.

Une autre solution consiste à fabriquer une couche résistive d'épaisseur totale maximale $e_{max}$ de 850 $\mu$m par dépôts successifs de matériau résistif, soit par sérigraphie pour les faibles épaisseurs, soit par la méthode dite du Dr. Blade pour les épaisseurs plus importantes. Une cuisson à 850°C est effectuée après chaque dépôt. La couche résistive finale de 850$\mu$m d'épaisseur est ensuite amincie par paliers avec un disque abrasif et les deux résistances $R_1$ et $R_2$ sont mesurées à chaque amincissement.

Cette phase de dimensionnement consiste ainsi à suivre l'évolution du rapport $I_1/I_2$ ou du rapport $R_2/R_1$ avec l'épaisseur de la couche résistive. Ce rapport passe par la valeur 2,83 lorsque l'épaisseur de la couche atteint la valeur seuil $e_s$ à détecter de 250 $\mu$m.

Le procédé de dimensionnement selon l'invention consiste ensuite soit à multiplier la longueur des électrodes de la seconde paire 200 par ce facteur de 2,83 déterminé à l'épaisseur seuil $e_s$, soit, de manière équivalente, à diviser la longueur des électrodes de la première paire 100 par ledit facteur. La multiplication des ordonnées de la courbe C6 de la figure 6 par ce facteur conduit à la courbe C7. Cette dernière, correspondant aux électrodes les plus larges et les plus espacées avec une longueur de 2830 $\mu$m, et la courbe C5 correspondant aux électrodes les plus rapprochées avec une longueur de 1000 $\mu$m, se couperont alors sensiblement au point d'abscisse $e_s$ = 250 $\mu$m. Les rapports $I_1/I_2$ ou $R_2/R_1$ des courants ou résistances entre les électrodes des paires 100 et 200 ainsi dimensionnées seront égaux à 1 lorsque l'épaisseur de matériau purement résistif atteindra la valeur seuil $e_s$, dans cet exemple, de 250 $\mu$m. Un alternative consisterait à mesurer l'évolution des différences $I_1$-$I_2$ ou $R_2$-$R_1$, ces différences étant nulles lorsque l'épaisseur de matériau purement résistif atteindra la valeur seuil $e_s$, dans cet exemple, de 250 $\mu$m. Ce mode de réalisation optimise la précision de la réponse du capteur autour de l'épaisseur seuil $e_s$ par rapport au mode de réalisation dans lequel seuls la largeur et l'espacement sont ajustés, pour que le rapport $I_1/I_2$ soit égal à 1 à la valeur seuil $e_s$.

La figure 5 est utile pour dimensionner les paires d'électrodes en fonction de l'épaisseur seuil à détecter.

En effet, il apparaît sur cette figure 5 que le comportement asymptotique se manifeste pour une épaisseur d'autant plus faible que le rapport $(s=\ell)/e$ est petit. Préférentiellement, la première paire d'électrodes est choisie avec un espacement inférieur à au moins cinq fois l'épaisseur seuil (courbe s= $\ell$ =1 u.a à l'abscisse 5 u.a par exemple). La seconde paire d'électrodes peut être choisie de manière à être le plus loin possible de la région asymptotique à 5 u.a. La courbe s = $\ell$ =10 u.a apparaît comme un bon compromis pour ne pas multiplier exagérément la largeur et l'espacement de la seconde paire d'électrodes par rapport à la première. Ce choix conduit aux dimensions représentées à la figure 5a pour un croisement des courants à $e_s$ = 250$\mu$m, à savoir s = $\ell$ = 50$\mu$m et L = 1 u.a' (u.a' est une longueur unitaire pour la longueur des électrodes, pas nécessairement égale à la longueur unitaire u.a utilisée pour les autres dimensions, largeur et espacement des électrodes ainsi qu'épaisseur de couche) pour les petites électrodes et s = $\ell$ = 500 $\mu$m et L = 2,19 u.a' pour les grandes électrodes. La figure 5b montre que le choix de $e_s$ supérieur à 5s pour les petites électrodes n'est pas absolument indispensable, puisqu'un choix de $e_s$ = 2s conduit encore à une précision acceptable au croisement des courants (figure 5b), avec l'avantage de pouvoir utiliser une technologie à 125 $\mu$m au lieu d'une technologie à 50 $\mu$m plus difficile et coûteuse à mettre en oeuvre.

Le dimensionnement des électrodes les plus rapprochées et/ou les plus étroites sera a priori conditionné par les contraintes technologiques. De ce fait, il ne servirait à rien, pour augmenter le caractère asymptotique, de prendre des électrodes avec une largeur inférieure à leur espacement. Il convient alors de choisir la valeur minimale d'espacement et de largeur permise par la technologie et, de préférence, dans un rapport s/$\ell$=1 pour les électrodes les plus rapprochées.

Pour les électrodes les plus espacées, le retardement recherché du caractère asymptotique par rapport à l'épaisseur seuil pourrait encore être augmenté en diminuant le rapport s/$\ell$ (figure 2), donc en augmentant la largeur de ces électrodes (l'espacement étant fixé). Cependant, comme la largeur des électrodes est moins influente que leur espacement sur le retardement du caractère asymptotique, cette possibilité, qui implique une augmentation de la quantité de métal utilisée et un dispositif plus encombrant, n'est pas forcément très intéressante.

Pour ces mêmes raisons, il peut donc s'avérer plus avantageux de ne pas rechercher à retarder le caractère asymptotique par rapport à l'épaisseur seuil, mais, plutôt, de diminuer la largeur des électrodes les plus espacées, en trouvant un compromis avec la perte concomitante de précision au croisement des courants.

En résumé, un exemple de procédé de dimensionnement d'un dispositif de détection d'une épaisseur seuil $e_s$ d'une couche 3 de matériau purement résistif déposée sur des électrodes du dispositif, comprend les étapes suivantes :

α) déposer une épaisseur seuil $e_s$ choisie de matériau purement résistif sur une première 100 et une deuxième 200 paire d'électrodes expérimentales, reliées à une source 2 de tension U, et différant par un premier paramètre pris parmi la largeur et l'espacement des électrodes ;

β) mesurer les intensités ou les résistances, à l'épaisseur seuil $e_s$ choisie, pour chaque paire d'électrodes expérimentales et calculer le rapport $I_1/I_2$ des intensités $I_1, I_2$ ou le rapport $R_2/R_1$ des résistances $R_2, R_1$ entre les électrodes de chaque paire ;

γ) fabriquer un capteur comprenant deux paires d'électrodes différant par le même premier paramètre que les électrodes expérimentales et par au moins un deuxième paramètre pris parmi la longueur et la tension d'alimentation des électrodes, ce deuxième paramètre différant selon un rapport égal au rapport $I_1/I_2$ des intensités ou au rapport $R_2/R_1$ des résistances, mesurées à l'épaisseur seuil $e_s$ à l'étape β) précédente, entre les paires d'électrodes expérimentales.

Selon une première variante de ce procédé de dimensionnement :

- lors de l'étape α), les première 100 et deuxième 200 paires d'électrodes expérimentales présentent respectivement une première 101 et deuxième 201 largeur, mais sont de longueur, d'espacement et de tensions d'alimentation identiques ;
- lors de l'étape γ), un capteur est fabriqué, comprenant deux paires d'électrodes présentant respectivement les mêmes première 101 et deuxième 201 largeurs que celles des électrodes expérimentales, un espacement identique, et dans lequel le rapport $L_3/L_1$ entre la longueur $L_3$, $L_1$ des électrodes 200a, 200b, 100a, 100b de la deuxième 200 et de la première paire 100, ou le rapport entre la tension appliquée, en utilisation, aux bornes des électrodes de la deuxième 200 et de la première 100 paire, est égal au rapport des intensités $I_1/I_2$ ou des résistances $R_2/R_1$, mesurées à l'épaisseur seuil choisie $e_s$ à l'étape β) antérieure, entre les paires d'électrodes expérimentales.

Cette première variante permet donc la réalisation d'un dispositif de détection comprenant deux paires d'électrodes présentant, respectivement, les mêmes première 101 et deuxième 201 largeurs que celles des électrodes expérimentales, et un espacement identique. Dans ce dispositif, le rapport $L_3/L_1$ entre la longueur $L_3$, $L_1$ des électrodes 200a, 200b, 100a, 100b de la deuxième 200 et de la première paire 100, ou le rapport entre la tension appliquée, en utilisation, aux bornes des électrodes de la deuxième 200 et de la première 100 paire, est égal au rapport des intensités $I_1/I_2$ ou des résistances $R_2/R_1$, mesurées, à l'épaisseur seuil choisie $e_s$ à l'étape β) du procédé de dimensionnement précédent, entre les paires d'électrodes expérimentales.

Selon une deuxième variante du procédé de dimensionnement :

- lors de l'étape α), les première 100 et deuxième 200 paires d'électrodes expérimentales présentent respectivement un premier 101 et deuxième 201 espacement, mais sont de longueur, de largeur et de tensions d'alimentation identiques ;
- lors de l'étape γ) un capteur est fabriqué, comprenant deux paires d'électrodes présentant respectivement les mêmes premier 101 et deuxième 201 espacements que ceux des électrodes expérimentales, des largeurs identiques, et dans lequel le rapport $L_3/L_1$ entre la longueur $L_3$, $L_1$ des électrodes 200a, 200b, 100a, 100b de la deuxième 200 et de la première paire 100, ou le rapport entre la tension appliquée, en utilisation, aux bornes des électrodes de la deuxième 200 et de la première 100 paire, est égal au rapport des intensités $I_1/I_2$ ou des résistances $R_2/R_1$, mesurées à l'épaisseur seuil choisie $e_s$ à l'étape β) antérieure, entre les paires d'électrodes expérimentales.

Cette deuxième variante permet donc la réalisation d'un dispositif de détection comprenant deux paires d'électrodes présentant respectivement les mêmes premier 101 et deuxième 201 espacements que ceux des électrodes expérimentales, des largeurs identiques. Dans ce dispositif, le rapport $L_3/L_1$ entre la longueur $L_3$, $L_1$ des électrodes 200a, 200b, 100a, 100b de la deuxième 200 et de la première paire 100, ou le rapport entre la tension appliquée, en utilisation, aux bornes des électrodes de la deuxième 200 et de la première 100 paire, est égal au rapport des intensités $I_1/I_2$ ou des résistances $R_2/R_1$, mesurées, à l'épaisseur seuil choisie $e_s$ à l'étape β) du procédé de dimensionnement précédent, entre les paires d'électrodes expérimentales.

Selon une troisième variante de ce procédé :

- lors de l'étape α) les première 100 et deuxième 200 paires d'électrodes expérimentales, diffèrent par la largeur et l'espacement des électrodes, les électrodes étant de longueur et de tensions d'alimentation U identiques ;
- lors de l'étape γ) un capteur est fabriqué, comprenant deux paires d'électrodes présentant les mêmes largeur et espacement que les électrodes expérimentales, et dans lequel le rapport $L_3/L_1$ entre la longueur $L_3$, $L_1$ des électrodes 200a, 200b, 100a, 100b de la deuxième 200 et de la première paire 100, ou le rapport entre la tension appliquée, en utilisation, aux bornes des électrodes de la deuxième 200 et de la première 100 paire, est égal au rapport des intensités $I_1/I_2$ ou des résistances $R_2/R_1$, mesurées à l'épaisseur seuil choisie $e_s$ à l'étape β) antérieure, entre les paires d'électrodes expérimentales.

Cette troisième variante permet donc la réalisation d'un dispositif de détection comprenant deux paires d'électrodes présentant les nêmes largeurs et espacements que les électrodes expérimentales. Dans ce lispositif, le rapport $L_3/L_1$ entre la longueur $L_3$, $L_1$ des électrodes 200a, 200b, 100a, 100b de la deuxième 200 et de la première paire 100, ou le rapport entre la tension appliquée, en utilisation, aux bornes des électrodes de la leuxième 200 et de la première paire 100, est égal au rapport des intensités $I_1/I_2$ ou des résistances $R_2/R_1$, mesurées à l'épaisseur seuil choisie $e_s$ à l'étape β) du procédé de dimensionnement précédent, entre les paires d'électrodes expérimentales.

Dans les différents modes de réalisation décrits, la largeur 101 de la première paire d'électrodes peut être choisie entre 100 nm (nanomètres) et 1 cm (centimètre), de préférence entre 10 μm (micromètres) et 1 mm (millimètre), typiquement de 30 μm à 250 μm. La largeur des électrodes de la deuxième paire peut être choisie entre 500 nm et 5 cm, de préférence entre 50 μm et 5 mm, typiquement de 250 μm à 1 mm.

D'une manière plus générale, la largeur 101 de la première paire peut être choisie pour être inférieure ou égale à $e_s/2$, de préférence, comprise entre $e_s/10$ et $e_s/4$.

De préférence, le rapport entre la largeur des électrodes de la première paire et la largeur des électrodes de la deuxième paire peut être compris entre 1 : 1000 et 10 : 1, de préférence entre 1 : 100 et 1 : 1, typiquement de 1 : 10 à 1 : 2.

En outre, l'espacement des électrodes de la première paire est choisi entre 100 nm et 1 cm de préférence entre 10 μm et 1 mm, typiquement de 30 μm à 250 μm, et l'espacement des électrodes de la deuxième paire est compris entre 500 nm et 5 cm, de préférence entre 50 μm et 5 mm, typiquement de 250 à 1 mm.

De préférence, le rapport entre le premier et le deuxième espacement est compris entre 1 : 1000 et 1 : 1, de préférence entre 1 : 100 et 1 : 2, typiquement de 1 : 10 à 1 : 3.

Le matériau des électrodes influence également la précision de la mesure de résistivité. Ainsi, les électrodes sont constituées préférentiellement de silicium dopé, de platine, d'or, d'argent-palladium ou d'oxydes métalliques lorsque l'atmosphère d'utilisation est corrosive comme, par exemple, dans un pot d'échappement en utilisation. Si l'atmosphère le permet, les matériaux utilisables peuvent également être l'aluminium, le cuivre, l'étain, etc. Les électrodes peuvent ainsi être constituées de matériaux divers et variés, du moment que leur résistivité électrique reste négligeable par rapport à celle de la couche dont on veut mesurer l'épaisseur. Il convient, en outre, de s'assurer que la résistance électrique des électrodes est négligeable par rapport à celle de la couche dont on veut mesurer l'épaisseur.

La précision de la mesure est d'autant plus importante que les procédés de fabrication du capteur, par exemple pour déposer les électrodes sur le support isolant, seront précis.

Par exemple, la sérigraphie ne permet qu'un dimensionnement à 5-10% près, notamment pour les électrodes les plus courtes et les plus rapprochées. Une meilleure précision pourrait être obtenue en déposant les électrodes par photolithographie sur substrat d'alumine.

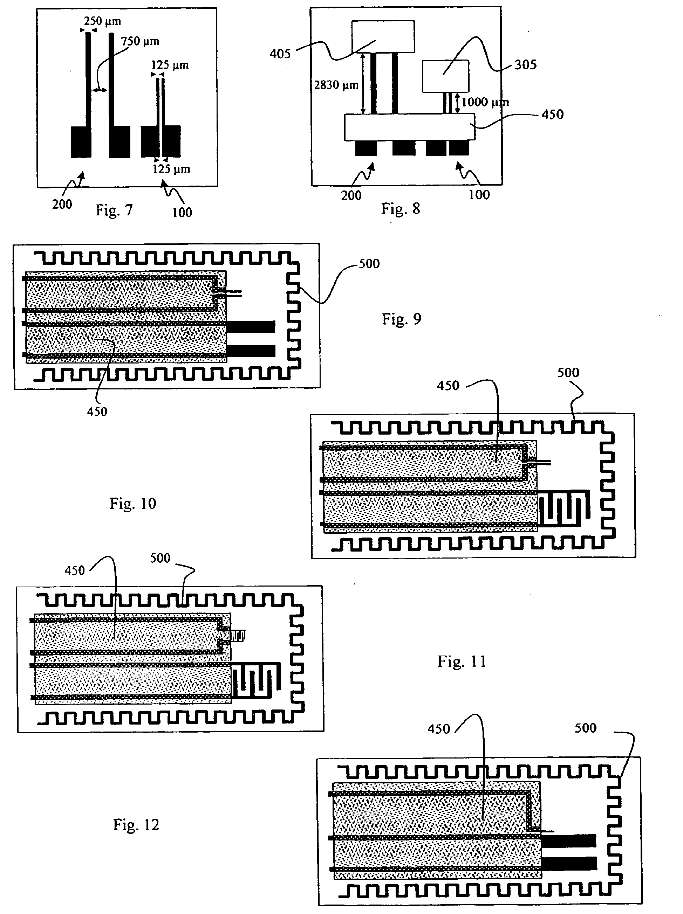

Une solution avantageuse, illustrée aux figures 7 et 8, consiste à déposer une première paire d'électrodes 100 de longueur prédéterminée supérieure à la longueur souhaitée (dans l'exemple illustré : supérieure à 1000 μm), puis à déposer une deuxième paire d'électrodes 200 de longueur prédéterminée supérieure à la longueur dimensionnée précédemment, c'est-à-dire supérieure à 2830 μm. Des caches 305, 405 et 450 en matière isolante sont ensuite déposés de façon à ne laisser en contact électrique avec la couche de matériau résistif qu'une longueur $L_1$ d'électrode de la première paire égale à la longueur souhaitée, ici de 1000 μm, et qu'une longueur $L_3$ d'électrode de la deuxième paire égale à la longueur déterminée lors de la phase de dimensionnement, ici de 2830 μm, c'est-à-dire égale à $L_2$ (la longueur de la deuxième paire d'électrodes expérimentales de 1000 μm) multipliée par la valeur du rapport $I_1/I_2$ ou $R_2/R_1$ des électrodes expérimentales à l'épaisseur seuil.

Ce cache permet également de simplifier la fabrication des électrodes avec les longueurs prédéfinies, en séparant les zones de mesure des zones de connexion. Cette couche devrait être en matériau isolant électrique et chimiquement inerte vis-à-vis des électrodes, de la suie et des gaz d'échappement à des températures au moins égales à celle des séquences de régénération de filtre à particule (soit environ 800°C).

Les électrodes doivent être dimensionnées en fonction de l'application. Les meilleures précisions seront obtenues pour une gamme d'épaisseurs dans laquelle la conductance de la petite paire d'électrodes en fonction de l'épaisseur de la couche sera située dans le domaine asymptotique de la courbe (partie droite de la courbe C5 en figure 6) alors que celle de la grande paire sera dans le domaine pseudo-linéaire (partie gauche de la courbe C6 en figure 6).

Pour ce faire, il pourrait être envisagé de rapprocher au maximum les petites électrodes et d'écarter au maximum les grandes. Néanmoins, s'il y avait un rapport trop important entre les espacements des électrodes des deux paires, la longueur des grandes électrodes nécessaire pour obtenir un croisement des courbes de résistance ou de courant à la valeur seuil $e_s$ serait trop importante (selon le mode de réalisation dans lequel la longueur est ajustée dans un rapport idoine). Outre des inconvénients d'encombrement, la précision risquerait d'être perdue.

Un autre mode de réalisation de l'invention consiste à multiplier la tension U aux bornes de la deuxième paire d'électrodes 200 (ou, de manière équivalente, de diviser la tension aux bornes de la première paire 100) par la valeur du rapport $I_1/I_2$ des électrodes expérimentales à l'épaisseur seuil, les électrodes expérimentales différant par au moins un paramètre tel que la largeur ou l'espacement des électrodes.

Autrement dit, lors de la phase de dimensionnement, une même tension U est appliquée aux bornes des deux paires d'électrodes 100 et 200. Mais dans ce mode de réalisation, au lieu de multiplier (ou de diviser) la longueur des électrodes, c'est la tension qui est multipliée (ou divisée). Ainsi, le procédé de mesure selon l'invention consiste à appliquer soit une tension U aux bornes de la première paire 100 et une tension $U_{200}$ aux bornes de la deuxième paire, $U_{200}$ étant égale à U multipliée par la valeur du rapport $I_1/I_2$ des électrodes expérimentales à l'épaisseur seuil, soit une tension U aux cornes de la deuxième paire 200 et une tension $U_{100}$ aux bornes de la première paire, $U_{100}$ étant égale à U divisée par la valeur du rapport $I_1/I_2$ des électrodes expérimentales à l'épaisseur seuil.

Une autre possibilité consiste à faire croiser les intensités à l'épaisseur seuil en alimentant la grande paire d'électrodes (deuxième paire) avec une tension plus élevée, le rapport de ces tensions « expérimentales » déterminant ensuite celui des longueurs de ladite deuxième paire si les deux paires d'électrodes doivent être alimentées avec la même tension dans le dispositif final, ce qui est plus simple à mettre en oeuvre. De manière alternative, la tension aux bornes de la première paire est réduite, le rapport de ces tensions « expérimentales » déterminant ensuite la réduction de longueur de ladite première paire, par exemple avec un cache (voir ci-après).

Les figures 9 à 12 illustrent différentes formes et agencement des paires d'électrodes. Les deux paires d'électrodes peuvent, comme illustré en figure 9, être rectangulaires. Pour résoudre les problèmes dus à une grande différence de longueurs entre les deux paires d'électrodes, il peut être envisagé que les électrodes de la première paire soient rectangulaires et que les électrodes de la deuxième paire soient interdigitées (figure 10). Pour des couches très résistives, deux paires d'électrodes interdigitées sont envisageables (figure 11). Une conception à trois électrodes peut également être envisagée (figure 12), pourvu que l'électrode centrale présente la même longueur et/ou largeur que celle qui a été calculée lors de la phase de dimensionnement.

Les capteurs illustrés dans les figures 8 à 12 comprennent également un cache 450 en matière isolante. Le dépôt de suie entre les connexions ne doit pas court-circuiter de manière significative celui entre les électrodes. La couche isolante précédente peut assurer cette protection, usqu'aux connexions filaires avec le circuit électrique de mesure. Ces dernières doivent être soit isolées électriquement de la suie, soit à défaut écartées suffisamment par rapport à l'espacement des électrodes.

Une solution pour s'affranchir des caches isolants, décrit en référence des figures 8 à 12, tout en respectant les géométries prédéfinies des électrodes, consisterait à assurer les connexions par l'autre face du support avec des vias percés dans l'alumine sous les électrodes.

La solution de vias dans l'alumine permet, outre la solution à la réalisation des électrodes à dimension de fonctionnement souhaitée, de récupérer les connexions en face arrière du substrat d'alumine. Le problème d'isolation et d'espacement des connexions pourrait éventuellement être simplifié. Des solutions avec substrat multicouches d'alumine et vias peuvent aussi être envisagées pour solutionner les problèmes d'isolement des connexions.

La méthode de mesure et le dispositif de détection peuvent être utilisés pour détecter le dépôt d'une épaisseur seuil d'une couche de particules de suie dans un pot d'échappement comprenant un filtre à particules (FAP), et pour contrôler le monitorage de la régénération du FAP. A cette fin, le signal généré lorsque les première et deuxième résistances ou intensités sont égales consiste à commander la régénération de filtre à particules. Pour cela, au moins un dispositif de détection selon l'invention est disposé en amont du filtre à particules pour la mise en oeuvre du procédé de mesure selon l'invention. Cet agencement permet donc de déterminer qu'une quantité seuil de suie a été fournie au filtre à particules.

Cette régénération, qui est conduite à environ 800°C, ne suffit pas toujours à éliminer tout le dépôt de suie situé sur le capteur du dispositif de détection selon l'invention.

Pour nettoyer le capteur et éliminer complètement le dépôt de suie situé sur les électrodes, une résistance chauffante 500 est disposée sur le support de manière à assurer une combustion totale du dépôt de matière résistive.

La résistance chauffante est préférentiellement en platine, mais comme pour les électrodes, d'autres matériaux conducteurs sont envisageables. L'agencement de la résistance chauffante 500 doit assurer une distribution aussi homogène que possible de la température au niveau du dépôt de suie recouvrant les électrodes (figures 9-12). L'utilisation du montage différentiel suppose en effet la même valeur de résistivité du dépôt à tous les endroits de la surface recouvrant les électrodes et donc la même température pour les deux paires d'électrodes.

La résistance chauffante peut être déposée soit du même côté du support que les électrodes, autour de celles-ci (figures 9-12), soit sur l'autre face du support, sous les électrodes. Les technologies de dépôt de la résistance chauffante sont les mêmes que celles décrites pour les électrodes.

Le support doit être choisi pour :

- résister aux conditions drastiques de l'échappement automobile, notamment aux fortes variations de température (100 à 900°C), au caractère corrosif des gaz d'échappement,
- être compatible au niveau électrique et mécanique avec le dépôt d'électrodes et avec celui d'une résistance chauffante permettant d'assurer la combustion de la suie sur le capteur, lors des séquences de régénération du FAP.

Les substrats plans constitués d'alumine à 96-99,9%, classiquement utilisés pour le dépôt de couches épaisses ou minces en microélectronique hybride semblent bien adaptés. Néanmoins d'autres substrats isolants sont envisageables, tels que les céramiques, les verres, l'oxyde de silicium, l'oxyde de magnésium, l'oxyde de zirconium, le nitrure d'aluminium, le nitrure de silicium, le nitrure de bore, etc. Le support peut être constitué soit d'un isolant électrique soit d'un conducteur ou semi-conducteur revêtu d'un isolant électrique. Il peut s'agir d'un métal revêtu d'un isolant électrique, de zircone, de carbure de silicium, etc. Pour des applications en milieu moins chaud et corrosif que celui des pots d'échappement, le support peut également être en plastique ou en silicium monocristallin.

La forme du support est préférentiellement plane, mais elle peut être adaptée en fonction de l'utilisation comme, par exemple, une forme curviligne ou cylindrique pour être utilisé dans un pot d'échappement, ou encore en doigts de gants.

Les capteurs utilisables en échappement automobile décrits précédemment, peuvent également être utilisés dans des chaudières, en particulier à fuel, ou dans des cheminées. L'intérêt est une optimisation des fréquences de nettoyage des chaudières et de ramonage des conduits.

L'épaisseur minimale pouvant être mesurée est de l'ordre de grandeur de la largeur de l'électrode la plus fine. En utilisant les technologies silicium, on peut donc envisager de mesurer des épaisseurs de couches à partir de $0,1\mu m$. Pour certaines applications, il est possible de remplacer avantageusement la balance à quartz pour contrôler in situ l'épaisseur au cours du dépôt.

Le procédé de mesure et le capteur résistif différentiel décrits dans la présente invention permettent la détection d'une épaisseur seuil d'un matériau purement résistif, indépendamment de sa résistivité. Ils sont applicables à la détermination de l'épaisseur de n'importe quel matériau purement résistif présentant une résistivité électrique finie. Ainsi, le capteur est adapté à la mesure d'une même épaisseur seuil dans une large gamme de résistivité sans nécessiter un réétalonnage en fonction de la résistivité du matériau et/ou des conditions de dépôt et de mesure (débit, température et pression des gaz d'échappement).

La méthode de mesure et le dispositif de détection selon l'invention sont particulièrement adaptés pour déterminer une épaisseur seuil d'un dépôt particulaire, en particulier un dépôt de particules de suie dont la résistivité peut être comprise entre $10^{+4}$ et $10^{+8}$ ohm.cm selon la composition de la suie (notamment sa teneur en hydrocarbures) et la température de dépôt (la température du moteur et des gaz d'échappement influence la composition du dépôt et sa résistivité).

De plus, son coût modique de fabrication avec des matériaux éprouvés en échappement automobile, la compatibilité de ses dimensions avec celle du pot, la simplicité et la fiabilité de son fonctionnement dans des conditions aussi hostiles, font que le capteur répond parfaitement au cahier des charges des constructeurs automobile.

De nombreuses variantes et alternatives peuvent être apportées sans pour cela sortir de l'invention et notamment :

- la longueur $L_1$ des électrodes 100a, 100b de la première paire peut être réduite au lieu d'augmenter la longueur des électrodes de la grande paire. Cette réduction peut être obtenue par dépôt d'un cache isolant supplémentaire.
- au moins un dispositif de détection selon l'invention peut également être disposé en aval du filtre à particules.

## Revendications

1. Procédé de mesure d'une épaisseur seuil ($e_s$) de couche (3) de matériau purement résistif déposée sur un capteur, ledit capteur comprenant au moins trois électrodes (100a, 100b, 200a, 200b) pour définir au moins deux paires (100, 200) d'électrodes disposées de manière adjacente sur un support (1) et alimentées avec une tension définie ($U$, $U_{100}$, $U_{200}$) générant un courant entre les électrodes, les paires d'électrodes différant par au moins un premier paramètre pris parmi la largeur, l'espacement, la longueur des électrodes et la tension d'alimentation de chaque paire, **caractérisé en ce qu'**au moins un deuxième desdits paramètres est ajusté pour qu'une première résistance

($R_1$) ou une première intensité ($I_1$) entre les électrodes (100a, 100b) de la première paire (100) et une deuxième résistance ($R_2$) ou une deuxième intensité ($I_2$) entre les électrodes (200a, 200b) de la deuxième paire (200) soient égales lorsque l'épaisseur seuil (es) est atteinte.

2. Procédé de mesure selon la revendication 1, dans lequel les paires d'électrodes diffèrent par au moins un premier paramètre pris parmi la largeur et l'espacement de chaque paire, et au moins un deuxième paramètres pris parmi l'espacement, la largeur, la longueur et la tension d'alimentation des électrodes est ajusté pour qu'une première résistance ($R_1$) ou une première intensité ($I_1$) entre les électrodes (100a, 100b) de la première paire (100) et une deuxième résistance ($R_2$) ou une deuxième intensité ($I_2$) entre les électrodes (200a, 200b) de la deuxième paire (200) soient égales lorsque l'épaisseur seuil ($e_s$) est atteinte.

3. Procédé de mesure selon l'une quelconque des revendications 1 ou 2, dans lequel une largeur (101) et/ou un espacement (102) de la première paire (100) d'électrodes sont tels que la dérivée du courant entre les électrodes (100a, 100b) de ladite première paire par rapport à l'épaisseur de la couche (3) tend vers zéro lorsque l'épaisseur augmente, et une largeur (201) et/ou un espacement (202) de la deuxième
paire (200) d'électrodes sont tels que le courant, entre les électrodes (200a, 200b) de ladite deuxième paire, augmente sensiblement linéairement avec l'épaisseur de la couche, lorsque l'épaisseur seuil ($e_s$) est atteinte, le procédé comprenant, en outre, les étapes consistant à :

   a) alimenter les paires d'électrodes (100, 200) avec une tension définie (U, $U_{100}$, $U_{200}$),
   b) mesurer une première résistance ($R_1$) ou une première intensité ($I_1$) entre les électrodes (100a, 100b) de la première paire (100),
   c) mesurer une deuxième résistance ($R_2$) ou une deuxième intensité ($I_2$) entre les électrodes (200a, 200b) de la deuxième paire (200),
   d) comparer les deuxième et première résistances ou les première et deuxième intensités,
   e) générer un signal lorsque lesdites résistances ou lesdites intensités sont égales, les largeurs (101, 201), et/ou les longueurs ($L_1$, $L_2$, $L_3$), et/ou les tensions d'alimentation (U, $U_{100}$, $U_{200}$), et/ou les espacements (102, 202) des électrodes étant adaptés pour que cette égalité soit obtenue lorsque l'épaisseur seuil ($e_s$) est atteinte.

4. Procédé selon l'une quelconque des revendications 1 à 3, dans lequel la largeur (101) des électrodes (100a, 100b) de la première paire (100) est comprise entre 100 nm et 1 cm, de préférence entre 10 $\mu$m et 1 mm, typiquement de 30 $\mu$m à 250 $\mu$m, et la largeur (201) des électrodes (200a, 200b) de la deuxième paire (200) est comprise entre 500 nm et 5 cm, de préférence entre 50 $\mu$m et 5 mm, typiquement de 250 $\mu$m à 1 mm.

5. Procédé selon la revendication 4, dans lequel le rapport entre la largeur (101) des électrodes de la première paire et la largeur (201) des électrodes de la deuxième paire est compris entre 1 : 1000 et 10 :1, de préférence entre 1 : 100 et 1 : 1, typiquement de 1 : 10 à 1 : 2.

6. Procédé selon l'une quelconque des revendications 1 à 3, dans lequel l'espacement (102) des électrodes de la première paire est compris entre 100 nm et 1 cm, de préférence entre 10 $\mu$m et 1 mm, typiquement de 30 $\mu$m à 250 $\mu$m, et l'espacement (202) des électrodes de la deuxième paire est compris entre 500 nm et 5 cm, de préférence entre 50 $\mu$m et 5 mm, typiquement de 250 $\mu$m à 1 mm.

7. Procédé selon la revendication 6, dans lequel le rapport entre le premier (102) et le deuxième (202) espacement est compris entre 1 : 1000 et 1 : 1, de préférence entre 1 : 100 et 1 : 2, typiquement de 1 : 10 à 1 : 3.

8. Procédé selon l'une quelconque des revendications 1 à 7, dans lequel les électrodes (200a, 200b) de la deuxième paire (200) présentent une longueur ($L_3$) différente de la longueur ($L_1$) des électrodes (100a, 100b) de la première paire.

9. Procédé selon l'une quelconque des revendications 1 à 7, dans lequel les électrodes (200a, 200b) de la deuxième paire (200) sont alimentées par une tension ($U_{200}$) différente de la tension d'alimentation ($U_{100}$) des électrodes (100a, 100b) de la première paire.

10. Procédé selon l'une quelconque des revendications 1 à 9, comprenant, en outre, une étape de nettoyage du capteur au moyen d'une résistance chauffante (500) disposée sur le support (1) de manière à assurer une combustion totale du dépôt de matière résistive.

**11.** Procédé de dimensionnement d'un dispositif de détection d'une épaisseur seuil ($e_s$) d'une couche (3) de matériau purement résistif déposée sur des électrodes du dispositif, pour la mise en oeuvre du procédé selon l'une quelconque des revendications 1 à 10, **caractérisé en ce qu'**il comprend les étapes suivantes :

$\alpha$) déposer une épaisseur seuil ($e_s$) choisie de matériau purement résistif sur une première (100) et une deuxième (200) paire d'électrodes expérimentales, reliées à une source (2) de tension (U), et différant par un premier paramètre pris parmi la largeur et l'espacement des électrodes ;

$\beta$) mesurer les intensités ou les résistances, à l'épaisseur seuil ($e_s$) choisie, pour chaque paire d'électrodes expérimentales et calculer le rapport ($I_1/I_2$) des intensités ($I_1,I_2$) ou le rapport ($R_2/R_1$) des résistances ($R_2,R_1$) entre les électrodes de chaque paire ;

$\gamma$) fabriquer un capteur comprenant deux paires d'électrodes différant par le même premier paramètre que les électrodes expérimentales et par au moins un deuxième paramètre pris parmi la longueur et la tension d'alimentation des électrodes, ce deuxième paramètre différant selon un rapport égal au rapport ($I_1/I_2$) des intensités ou au rapport ($R_2/R_1$) des résistances, mesurées à l'épaisseur seuil ($e_s$) à l'étape $\beta$) précédente, entre les paires d'électrodes expérimentales.

**12.** Procédé de dimensionnement selon la revendication 11, dans lequel :

- lors de l'étape $\alpha$), les première (100) et deuxième (200) paires d'électrodes expérimentales présentent respectivement une première (101) et deuxième (201) largeur, mais sont de longueurs, d'espacements et de tensions d'alimentation identiques ;
- lors de l'étape $\gamma$), un capteur est fabriqué, comprenant deux paires d'électrodes présentant respectivement les mêmes première (101) et deuxième (201) largeurs que celles des électrodes expérimentales, des espacements identiques, et dans lequel le rapport ($L_3/L_1$) entre la longueur ($L_3$, $L_1$) des électrodes (200a, 200b, 100a, 100b) de la deuxième (200) et de la première paire, ou le rapport ($U_{200}/U$, $U/U_{100}$) entre la tension (U, $U_{200}$, $U_{100}$) appliquée, en utilisation, aux bornes des électrodes (200a, 200b, 100a, 100b) de la deuxième (200) et de la première (100) paire, est égal au rapport des intensités ($I_1/I_2$) ou des résistances ($R_2/R_1$), mesurées à l'épaisseur seuil choisie ($e_s$) à l'étape $\beta$ antérieure, entre les paires d'électrodes expérimentales.

**13.** Procédé de dimensionnement selon la revendication 11, dans lequel :

- lors de l'étape $\alpha$), les première (100) et deuxième (200) paires d'électrodes expérimentales présentent respectivement un premier (101) et deuxième (201) espacement, mais sont de longueurs, de largeurs et de tensions d'alimentation identiques ;
- lors de l'étape $\gamma$) un capteur est fabriqué, comprenant deux paires d'électrodes présentant respectivement les mêmes premier (101) et deuxième (201) espacements que ceux des électrodes expérimentales, des largeurs identiques, et dans lequel le rapport ($L_3/L_1$) entre la longueur ($L_3$, $L_1$) des électrodes (200a, 200b, 100a, 100b) de la deuxième (200) et de la première paire, ou le rapport ($U_{200}/U$, $U/U_{100}$) entre la tension (U, $U_{200}$, $U_{100}$) appliquée, en utilisation, aux bornes des électrodes (200a, 200b, 100a, 100b) de la deuxième (200) et de la première (100) paire, est égal au rapport des intensités ($I_1/I_2$) ou des résistances ($R_2/R_1$), mesurées à l'épaisseur seuil choisie ($e_s$) à l'étape $\beta$ antérieure, entre les paires d'électrodes expérimentales.

**14.** Procédé de dimensionnement selon la revendication 11, dans lequel :

- lors de l'étape $\alpha$) les première (100) et deuxième (200) paires d'électrodes expérimentales, diffèrent par la largeur et l'espacement des électrodes, les électrodes étant de longueur et de tensions d'alimentation (U) identiques ;
- lors de l'étape y) un capteur est fabriqué, comprenant deux paires d'électrodes présentant les mêmes largeurs et espacements que les électrodes expérimentales, et dans lequel le rapport ($L_3/L_1$) entre la longueur ($L_3$, $L_1$) des électrodes (200a, 200b, 100a, 100b) de la deuxième (200) et de la première paire, ou le rapport ($U_{200}/U$, $U/U_{100}$) entre la tension (U, $U_{200}$, $U_{100}$) appliquée, en utilisation, aux bornes des électrodes (200a, 200b, 100a, 100b) de la deuxième (200) et de la première (100) paire, est égal au rapport des intensités ($I_1/I_2$) ou des résistances ($R_2/R_1$), mesurées à l'épaisseur seuil choisie ($e_s$) à l'étape $\beta$ antérieure, entre les paires d'électrodes expérimentales.

**15.** Dispositif de détection d'une épaisseur seuil ($e_s$) d'une couche (3) de matériau purement résistif, pour la mise en oeuvre du procédé de mesure selon l'une quelconque des revendications 1 à 10, comprenant un capteur (10) muni d'au moins trois électrodes (100a, 100b, 200a, 200b) pour définir au moins deux paires (100, 200) d'électrodes disposées de manière adjacente sur un support (1), une source (2) de tension reliée aux électrodes (100a, 100b, 200a, 200b) et réglée pour délivrer une tension entre chaque paire d'électrodes, et un moyen de mesure (103, 203) des résistances ($R_1$, $R_2$) ou des intensités entre les paires d'électrodes, **caractérisé en ce qu'**il comprend, en outre, un moyen de comparaison des résistances ou des intensités entre elles et un moyen de génération d'un signal quant les résistances ou les intensités mesurées sont égales, et **en ce que** les paires d'électrodes diffèrent par au moins un premier paramètre pris parmi la largeur et l'espacement des électrodes, et au moins un deuxième paramètres pris parmi l'espacement, la largeur, la longueur et le réglage de la source de tension d'alimentation des électrodes, le deuxième paramètre étant tel que, en utilisation, l'égalité de résistance ou d'intensité est obtenue lorsque l'épaisseur seuil ($e_s$) à détecter est déposée sur les électrodes.

16. Dispositif de détection selon la revendication 15, dans lequel une largeur (101) et/ou un premier espacement (102) de la première paire (100) d'électrodes (100a, 100b) sont tels que, en utilisation, la dérivée du courant entre les électrodes (100a, 100b) de ladite première paire par rapport à l'épaisseur de la couche (3) tend vers zéro lorsque l'épaisseur augmente, et une largeur (201) et/ou un deuxième espacement (202) de la deuxième paire (200) d'électrodes sont tels que, en utilisation, le courant entre les électrodes (200a, 200b) de ladite deuxième paire, augmente sensiblement linéairement avec l'épaisseur de la couche, lorsque l'épaisseur seuil ($e_s$) est atteinte, les largeurs et/ou les longueurs et/ou les espacements des électrodes et/ou le réglage de la source de tension d'alimentation étant adaptés pour que l'égalité de résistance ou d'intensité soit obtenue lorsque l'épaisseur seuil ($e_s$) est atteinte.

17. Dispositif de détection selon l'une quelconque des revendications 15 ou 16, dans lequel un cache (305, 405, 450) en matière isolante est disposé sur les électrodes de manière à ne laisser en contact électrique avec la couche de matériau résistif qu'une longueur d'électrode déterminée.

18. Dispositif de détection selon l'une quelconque des revendications 15 à 17, dans lequel les électrodes sont disposées de manière parallèle, interdigitée ou mixte.

19. Dispositif de détection selon la revendication 15, susceptible d'être obtenu par le procédé de dimensionnement selon la revendication 12, comprenant deux paires d'électrodes présentant, respectivement, les mêmes première (101) et deuxième (201) largeurs que celles des électrodes expérimentales, des espacements identiques, et dans lequel le rapport ($L_3/L_1$) entre la longueur ($L_3$, $L_1$) des électrodes (200a, 200b, 100a, 100b) de la deuxième (200) et de la première (100) paire, ou le rapport ($U_{200}/U$, $U/U_{100}$) entre la tension ($U$, $U_{200}$, $U_{100}$) appliquée, en utilisation, aux bornes des électrodes (200a, 200b, 100a, 100b) de la deuxième (200) et de la première (100) paire, est égal au rapport des intensités ($I_1/I_2$) ou des résistances ($R_2/R_1$), mesurées, à l'épaisseur seuil choisie ($e_s$) à l'étape β) du procédé de dimensionnement selon la revendication 12, entre les paires d'électrodes expérimentales.

20. Dispositif de détection selon la revendication 15, susceptible d'être obtenu par le procédé de dimensionnement selon la revendication 13, comprenant deux paires d'électrodes présentant respectivement les mêmes premier (101) et deuxième (201) espacements que ceux des électrodes expérimentales, des largeurs identiques, et dans lequel le rapport ($L_3/L_1$) entre la longueur ($L_3$, $L_1$) des électrodes (200a, 200b, 100a, 100b) de la deuxième (200) et de la première (100) paire, ou le rapport ($U_{200}/U$, $U/U_{100}$) entre la tension ($U$, $U_{200}$, $U_{100}$) appliquée, en utilisation, aux bornes des électrodes (200a, 200b, 100a, 100b) de la deuxième (200) et de la première (100) paire, est égal au rapport des intensités ($I_1/I_2$) ou des résistances ($R_2/R_1$), mesurées, à l'épaisseur seuil choisie ($e_s$) à l'étape β) du procédé de dimensionnement selon la revendication 13, entre les paires d'électrodes expérimentales.

21. Dispositif de détection selon la revendication 18, susceptible d'être obtenu par le procédé de dimensionnement selon la revendication 14, comprenant deux paires d'électrodes présentant les mêmes largeurs et espacements que les électrodes expérimentales, et dans lequel le rapport ($L_3/L_1$) entre la longueur ($L_3$, $L_1$) des électrodes (200a, 200b, 100a, 100b) de la deuxième (200) et de la première (100) paire, ou le rapport ($U_{200}/U$, $U/U_{100}$) entre la tension ($U$, $U_{200}$, $U_{100}$) appliquée, en utilisation, aux bornes des électrodes (200a, 200b, 100a, 100b) de la deuxième (200) et de la première (100) paire, est égal au rapport des intensités ($I_1/I_2$) ou des résistances ($R_2/R_1$), mesurées à l'épaisseur seuil choisie ($e_s$) à l'étape β) du procédé de dimensionnement selon la revendication 14, entre les paires d'électrodes expérimentales.

22. Utilisation du procédé de mesure selon l'une quelconque des revendications 1 à 10 pour détecter le dépôt d'une épaisseur seuil de couche de suie dans un pot d'échappement.

23. Utilisation du procédé de mesure selon l'une quelconque des revendications 3 à 10 pour détecter le dépôt d'une épaisseur seuil de couche de suie dans un pot d'échappement, au cours de laquelle le signal généré à l'étape e), lorsque la première et la deuxième résistance ou intensité sont égales, consiste à commander une étape de régénération de filtre à particules.

24. Pot d'échappement muni d'un filtre à particules, comprenant au moins un dispositif de détection selon l'une quelconque des revendications 15 à 21 disposé en amont du filtre à particules pour la mise en oeuvre du procédé de mesure selon l'une quelconque des revendications 1 à 10.

25. Pot d'échappement selon la revendication précédente comprenant, en outre, au moins un dispositif de détection selon l'une quelconque des revendications 15 à 21 disposé en aval du filtre à particules.

**Claims**

1. A method of measuring a threshold thickness ($e_s$) of a layer (3) of purely-resistive material deposited on a sensor, said sensor comprising at least three electrodes (100a, 100b, 200a, 200b) for defining at least two electrode pairs (100, 200) disposed in adjacent manner on a support (1) and powered with a defined voltage ($U$, $U_{100}$, $U_{200}$) generating a current between the electrodes, the electrode pairs differing by at least one first parameter selected from the width, the spacing, the length of the electrodes, and the voltage applied to each pair, the method being **characterized in that** at least one second parameter of said parameters is adjusted so that a first resistance ($R_1$) or a first current ($I_1$) between the electrodes (100a, 100b) of the first pair (100), and a second resistance ($R_2$) or a second current ($I_2$) between the electrodes (200a, 200b) of the second pair (200) are equal when the threshold thickness ($e_s$) is reached.

2. A measurement method according to claim 1, wherein the electrode pairs differ by at least one first parameter selected from the width and the spacing of each pair, and at least one second parameter selected from the spacing, the width, the length, and the voltage applied to the electrodes is adjusted so that a first resistance ($R_1$) or a first current ($I_1$) between the electrodes (100a, 100b) of the first pair (100) and a second resistance ($R_2$) or a second current ($I_2$) between the electrodes (200a, 200b) of the second pair (200) are equal when the threshold thickness ($e_s$) is reached.

3. A measurement method according to claim 1 or claim 2, wherein a width (101) and/or a spacing (102) of the first electrode pair (100) is/are such that the derivative of the current between the electrodes (100a, 100b) of said first pair relative to the thickness of the layer (3) tends towards zero as the thickness increases, and a width (201) and/or a spacing (202) of the second electrode pair (200) is/are such that the current between the electrodes (200a, 200b) of the second pair increases substantially linearly with the thickness of the layer when the threshold thickness ($e_s$) is reached, the method further comprising the steps consisting in:

   a) applying respective defined voltages ($U$, $U_{100}$, $U_{200}$) to the pairs of electrodes (100, 200);
   b) measuring a first resistance ($R_1$) or a first current ($I_1$) between the electrodes (100a, 100b) of the first pair (100) ;
   c) measuring a second resistance ($R_2$) or a second current ($I_2$) between the electrodes (200a, 200b) of the second pair (200);
   d) comparing the second and first resistances or the first and second currents; and
   e) generating a signal when said resistances or said currents are equal, the widths (101, 201) and/or the lengths ($L_1$, $L_2$, $L_3$), and/or the applied voltages ($U$, $U_{100}$, $U_{200}$), and/or the spacings (102, 202) of the electrodes being adapted so that said equality is obtained when the threshold thickness ($e_s$) is reached.

4. A method according to any one of claims 1 to 3, wherein the width (101) of the electrodes (100a, 100b) of the first pair (100) lies in the range 100 nm to 1 cm, preferably in the range 10 $\mu$m to 1 mm, typically in the range 30 $\mu$m to 250 $\mu$m, and the width (201) of the electrodes (200a, 200b) of the second pair (200) lies in the range 500 nm to 5 cm, preferably in the range 50 $\mu$m to 5 mm, typically in the range 250 $\mu$m to 1 mm.

5. A method according to claim 4, wherein the ratio between the width (101) of the electrodes of the first pair and the width (201) of the electrodes of the second pair lies in the range 1:1000 to 10:1, preferably in the range 1:100 to 1:1, typically in the range 1:10 to 1:2.

6. A method according to any one of claims 1 to 3, wherein the spacing (102) of the electrodes of the first pair lies in the range 100 nm to 1 cm, preferably in the range 10 $\mu$m to 1 mm, typically in the range 30 $\mu$m to 250 $\mu$m, and the spacing (202) of the electrodes of the second pair lies in the range 500 nm to 5 cm, preferably in the range 50 $\mu$m

to 5 mm, typically in the range 250 $\mu$m to 1 mm.

7. A method according to claim 6, wherein the ratio between the first and second spacings (102, 202) lies in the range 1:1000 to 1:1, preferably in the range 1:100 to 1:2, typically in the range 1:10 to 1:3.

8. A method according to any one of claims 1 to 7, wherein the electrodes (200a, 200b) of the second pair (200) present a length ($L_3$) different from the length ($L_1$) of the electrodes (100a, 100b) of the first pair.

9. A method according to any one of claims 1 to 7, wherein the electrodes (200a, 200b) of the second pair (200) have a voltage ($U_{200}$) applied thereto that is different from the voltage ($U_{100}$) applied to the electrodes (100a, 100b) of the first pair.

10. A method according to any one of claims 1 to 9, further comprising a step of cleaning the sensor by means of a heater resistance (500) disposed on the support (1) in such a manner as to ensure total combustion of the deposit of resistive material.

11. A method of dimensioning a detector device for detecting a threshold thickness ($e_s$) of a layer (3) of purely-resistive material deposited on electrodes of the device, in order to implement the method according to any one of claims 1 to 10, the dimensioning method being **characterized in that** it comprises the following steps:

$\alpha$) depositing a selected threshold thickness ($e_s$) of purely-resistive material on first and second experimental electrode pairs (100, 200) that are connected to a source (2) of voltage (U), and that differ in a first parameter selected from the width and the spacing of the electrodes;
$\beta$) measuring the currents or the resistances at the selected threshold thickness ($e_s$) for each experimental electrode pair, and calculating the ratio ($I_1/I_2$) of the currents ($I_1$, $I_2$) or the ratio ($R_2/R_1$) of the resistances ($R_2$, $R_1$) between the electrodes of each pair; and
$\gamma$) fabricating a sensor having two electrode pairs that differ by the same first parameter as the experimental electrodes and by at least one second parameter selected from the length and the voltage applied to the electrodes, the second parameter differing in a ratio equal to the ratio ($I_1/I_2$) of the currents or to the ratio ($R_2/R_1$) of the resistances as measured at the threshold thickness ($e_s$) at preceding step $\beta$) between the experimental electrode pairs.

12. A dimensioning method according to claim 11, wherein:

• during step $\alpha$), the first and second experimental electrode pairs (100, 200) present respective first and second widths (101, 201), but are of lengths, spacings, and applied voltages that are identical; and
• during step $\gamma$), a sensor is fabricated comprising two electrode pairs presenting respectively the same first and second widths (101, 201) as those of the experimental electrodes, and identical spacings, and in which the ratio ($L_3/L_1$) between the lengths ($L_3$, $L_1$) of the electrodes (200a, 200b, 100a, 100b) of the second and first pairs (200, 100), or the ratio ($U_{200}/U$, $U/U_{100}$) between the voltages (U, $U_{200}$, $U_{100}$) applied in use to the terminals of the electrodes (200a, 200b, 100a, 100b) of the second and first pairs (200, 100) is equal to the ratio of the currents ($I_1/I_2$) or of the resistances ($R_2/R_1$) measured at the selected threshold thickness ($e_s$) in prior step $\beta$) between the experimental electrode pairs.

13. A dimensioning method according to claim 11, wherein:

• during step $\alpha$), the first and second experimental electrode pairs (100, 200) present respective first and second spacings (101, 201), but are of lengths, widths, and applied voltages that are identical; and
• during step $\gamma$) a sensor is fabricated comprising two electrode pairs presenting respectively the same first and second spacings (102, 202) as the experimental electrodes, and identical widths, and in which the ratio ($L_3/L_1$) between the lengths ($L_3$, $L_1$) of the electrodes (200a, 200b, 100a, 100b) of the second and first pairs (200, 100), or the ratio ($U_{200}/U$, $U/U_{100}$) between the voltages (U, $U_{200}$, $U_{100}$) applied in use to the terminals of the electrodes (200a, 200b, 100a, 100b) of the second and first pairs (200, 100) is equal to the ratio of the currents ($I_1/I_2$) or of the resistances ($R_2/R_1$) measured at the selected threshold thickness ($e_s$) in prior step $\beta$) between the experimental electrode pairs.

14. A dimensioning method according to claim 11, wherein:

• during step α), the first and second experimental electrode pairs (100, 200) differ by the width and the spacing of the electrodes, the electrodes being of lengths and applied voltages (U) that are identical; and

• during step γ) a sensor is fabricated, comprising two pairs of electrodes presenting the same widths and spacings as the experimental electrodes, and in which the ratio ($L_3/L_1$) between the lengths ($L_3$, $L_1$) of the electrodes (200a, 200b, 100a, 100b) of the second and first pairs (200, 100), or the ratio ($U_{200}/U$, $U/U_{100}$) between the voltages (U, $U_{200}$, $U_{100}$) applied in use to the terminals of the electrodes (200a, 200b, 100a, 100b) of the second and first pairs (200, 100) is equal to the ratio of the currents ($I_1/I_2$) or of the resistances ($R_2/R_1$) measured at the selected threshold thickness ($e_s$) in prior step P) between the experimental electrode pairs.

15. A detector device for detecting a threshold thickness ($e_s$) of a layer (3) of purely-resistive material by implementing the measurement method according to any one of claims 1 to 10, the device comprising a sensor (10) provided with at least three electrodes (100a, 100b, 200a, 200b) for defining at least two electrode pairs (100, 200) disposed in adjacent manner on a support (1), a voltage source (2) connected to the electrodes (100a, 100b, 200a, 200b) and adjusted to deliver a voltage between each electrode pair, and measurement means (103, 203) for measuring the resistances ($R_1$, $R_2$) or the currents between the electrode pairs, the device being **characterized in that** it further comprises means for comparing the resistances or the currents with one another and means for generating a signal when the measured resistances or the measured currents are equal, and **in that** the pairs of electrodes differ by at least one first parameter selected from the width and the spacing of the electrodes, and by at least one second parameter selected from the spacing, the width, the length, and the setting of the voltage source applied to the electrodes, the second parameter being such that, in use, equal resistances or currents are obtained when the threshold thickness ($e_s$) that is to be detected has been deposited on the electrodes.

16. A detector device according to claim 15, wherein the width (101) and/or a first spacing (102) of the first pair (100) of electrodes (100a, 100b) are such that, in use, the derivative of the current between the electrodes (100a, 100b) of said first pair relative to the thickness of the layer (3) tends towards zero as the thickness increases, and a width (201) and/or a second spacing (202) of the second electrode pair (200) are such that, in use, the current between the electrodes (200a, 200b) of the second pair increases substantially linearly with the thickness of the layer when the threshold thickness ($e_s$) is reached, the width and/or the length and/or the spacings of the electrodes, and/or the setting of the voltage source being adapted so that equal resistances or currents are obtained when the threshold thickness ($e_s$) is reached.

17. A detector device according to claim 15 or claim 16, wherein a mask (305, 405, 450) of insulating material is placed on the electrodes so as to leave only a determined length of electrode in electrical contact with the layer of resistive material.

18. A detector device according to any one of claims 15 to 17, wherein the electrodes are disposed in parallel, interdigitated, or combined manner.

19. A detector device according to claim 15, obtainable by the dimensioning method according to claim 12, the device having two pairs of electrodes presenting respectively the same first and second widths (101, 201) as the experimental electrodes, identical spacings, and in which the ratio ($L_3/L_1$) between the lengths ($L_3$, $L_1$) of the electrodes (200a, 200b, 100a, 100b) of the second and first pairs (200, 100), or the ratio ($U_{200}/U$, $U/U_{100}$) between the voltages (U, $U_{200}$, $U_{100}$) applied in use to the terminals of the electrodes (200a, 200b, 100a, 100b) of the second and first pairs (200, 100) is equal to the ratio of the currents ($I_1/I_2$) or of the resistances ($R_2/R_1$) measured at the selected threshold thickness ($e_s$) in step β) of the dimensioning method according to claim 12, between the experimental electrode pairs.

20. A detector device according to claim 15, obtainable by the dimensioning method according to claim 13, the device having two electrode pairs presenting respectively the same first and second spacings (102, 202) as the experimental electrodes, and identical widths, and in which the ratio ($L_3/L_1$) between the lengths ($L_3$, $L_1$) of the electrodes (200a, 200b, 100a, 100b) of the second and first pairs (200, 100), or the ratio ($U_{200}/U$, $U/U_{100}$) between the voltages (U, $U_{200}$, $U_{100}$) applied in use to the terminals of the electrodes (200a, 200b, 100a, 100b) of the second and first pairs (200, 100) is equal to the ratio of the currents ($I_1/I_2$) or of the resistances ($R_2/R_1$) measured at the selected threshold thickness ($e_s$) in step P) of the dimensioning method according to claim 13, between the experimental electrode pairs.

21. A detector device according to claim 18, obtainable by the dimensioning method according to claim 14, the device having two electrode pairs presenting the same widths and spacings as the experimental electrodes, and in which the ratio ($L_3/L_1$) between the lengths ($L_3$, $L_1$) of the electrodes (200a, 200b, 100a, 100b) of the second and first pairs (200, 100), or the ratio ($U_{200}/U$, $U/U_{100}$) between the voltages (U, $U_{200}$, $U_{100}$) applied in use to the terminals of the electrodes (200a, 200b, 100a, 100b) of the second and first pairs (200, 100) is equal to the ratio of the currents ($I_1/I_2$) or of the resistances ($R_2/R_1$) measured at the selected threshold thickness ($e_s$) in step P) of the dimensioning method according to claim 14, between the experimental electrode pairs.

22. The use of the measurement method according to any one of claims 1 to 10 for detecting the deposition of a threshold thickness of a layer of soot in an exhaust muffler.

23. The use of the measurement method according to any one of claims 3 to 10 for detecting the deposition of a threshold thickness of a layer of soot in an exhaust muffler, during which method, the signal generated in step e), when the first and second resistances or currents are equal consists in triggering a step of regenerating a particle filter.

24. An exhaust muffler having a particle filter including at least one detector device according to any one of claims 15 to 21, located upstream from the particle filter in order to implement the measurement method according to any one of claims 1 to 10.

25. An exhaust muffler according to the preceding claim, further comprising at least one detector device according to any one of claims 15 to 21 located downstream from the particle filter.

**Patentansprüche**

1. Verfahren zum Messen einer Schwellendicke (es) einer Schicht (3) aus einem rein ohmschen Material, die sich auf einem Sensor abgelagert hat, wobei der Sensor wenigstens drei Elektroden (100a, 100b, 200a, 200b) umfasst, um wenigstens zwei Paare (100, 200) von Elektroden zu bilden, die nebeneinander auf einem Träger (1) angeordnet sind und mit einer definierten Spannung (U, $U_{100}$, $U_{200}$) versorgt werden, die zwischen den Elektroden einen Strom erzeugt, wobei die Paare von Elektroden wenigstens hinsichtlich eines ersten Parameters aus der Breite, dem Abstand, der Länge der Elektroden und der Versorgungsspannung jedes Paares verschieden sind, **dadurch gekennzeichnet, dass** wenigstens ein zweiter der Parameter so eingestellt ist, dass ein erster Widerstand ($R_1$) oder eine erste Stromstärke ($I_1$) zwischen den Elektroden (100a, 100b) des ersten Paares (100) und ein zweiter Widerstand ($R_2$) oder eine zweite Stromstärke ($I_2$) zwischen den Elektroden (200a, 200b) des zweiten Paares (200) gleich sind, wenn die Schwellendicke (es) erreicht ist.

2. Verfahren zum Messen gemäß Anspruch 1, wobei die Paare von Elektroden hinsichtlich wenigstens eines ersten Parameters aus der Länge und dem Abstand jedes Paares verschieden sind und wenigstens ein zweiter Parameter aus dem Abstand, der Breite, der Länge und der Versorgungsspannung der Elektroden so eingestellt ist, dass ein erster Widerstand ($R_1$) oder eine erste Stromstärke ($I_1$) zwischen den Elektroden (100a, 100b) des ersten Paares (100) und ein zweiter Widerstand ($R_2$) oder eine zweite Stromstärke ($I_2$) zwischen den Elektroden (200a, 200b) des zweiten Paares (200) gleich sind, wenn die Schwellendicke ($e_s$) erreicht ist.

3. Verfahren zum Messen gemäß einem der Ansprüche 1 oder 2, wobei eine Breite (101) und/oder ein Abstand (102) des ersten Paares (100) von Elektroden derart sind, dass die Ableitung des Stromes zwischen den Elektroden (100a, 100b) des ersten Paares nach der Dicke der Schicht (3) mit zunehmender Dicke gegen Null geht, und in dem eine Breite (201) und/oder ein Abstand (202) des zweiten Paares (200) von Elektroden derart sind, dass der Strom zwischen den Elektroden (200a, 200b) des zweiten Paares im Wesentlichen linear mit der Dicke der Schicht zunimmt, wenn die Schwellendicke (es) erreicht ist, wobei das Verfahren ferner die Schritte umfasst, die beinhalten:

a) Versorgen der Paare von Elektroden (100, 200) mit einer definierten Spannung (U, $U_{100}$, $U_{200}$),
b) Messen eines ersten Widerstandes ($R_1$) oder einer ersten Stromstärke ($I_1$) zwischen den Elektroden (100a, 100b) des erste Paares (100),
c) Messen eines zweiten Widerstandes ($R_2$) oder einer zweiten Stromstärke ($I_2$) zwischen den Elektroden (200a, 200b) des zweiten Paares (200),
d) Vergleichen des zweiten und des ersten Widerstandes oder der ersten und der zweiten Stromstärke,
e) Erzeugen eines Signals, wenn die Widerstände oder die Stromstärken gleich sind, wobei die Breiten (101, 201) und/oder die Längen ($L_1$, $L_2$, $L_3$) und/oder die Versorgungsspannungen (U, $U_{100}$, $U_{200}$) und/oder die Abstände (102, 202) der Elektroden derart angepasst sind, dass diese Gleichheit erreicht wird, wenn die Schwellendicke (es) erreicht ist.

4. Verfahren nach einem der Ansprüche 1 bis 3, wobei die Breite (101) der Elektroden (100a, 100b) des ersten Paares (100) zwischen 100 nm und 1 cm, vorzugsweise zwischen 10 $\mu$m und 1 mm und typischerweise zwischen 30 $\mu$m und 250 $\mu$m liegt, und die Breite (201) der Elektroden (200a, 200b) des zweiten Paares (200) zwischen 500 nm und 5 cm, vorzugsweise zwischen 50 $\mu$m und 5 mm und typischerweise zwischen 250 $\mu$m und 1 mm liegt.

5. Verfahren nach Anspruch 4, wobei das Verhältnis zwischen der Breite (101) der Elektroden des ersten Paares und der Breite (201) der Elektroden des zweiten Paares zwischen 1:1000 und 10:1, vorzugsweise zwischen 1:100 und 1:1 1 und typischerweise zwischen 1:10 und 1:2 liegt.

6. Verfahren nach einem der Ansprüche 1 bis 3, wobei der Abstand (102) der Elektroden des ersten Paares zwischen 100 nm und 1 cm, vorzugsweise zwischen 10$\mu$ m und 1 mm und typischerweise zwischen 30 $\mu$m und 250 $\mu$m liegt, und der Abstand (202) der Elektroden des zweiten Paares zwischen 500 nm und 5 cm, vorzugsweise zwischen 50 $\mu$m und 5 mm und typischerweise zwischen 250 $\mu$m und 1 mm liegt.

7. Verfahren nach Anspruch 6, wobei das Verhältnis zwischen dem ersten (102) und dem zweiten (202) Abstand zwischen 1:1000 und 1:1, vorzugsweise zwischen 1:100 und 1:2 und typischerweise zwischen 1:10 und 1:3 liegt.

8. Verfahren nach einem der Ansprüche 1 bis 7, wobei die Elektroden (200a, 200b) des zweiten Paares (200) eine Länge ($L_3$) aufweisen, die von der Länge ($L_1$) der Elektroden (100a, 100b) des ersten Paare verschieden ist.

9. Verfahren nach einem der Ansprüche 1 bis 7, wobei die Elektroden (200a, 200b) des zweiten Paares (200) durch eine Spannung ($U_{200}$) versorgt werden, die von der Versorgungsspannung ($U_{100}$) der Elektroden (100a, 100b) des ersten Paares verschieden ist.

10. Verfahren nach einem der Ansprüche 1 bis 9, das ferner einen Schritt zum Reinigen des Sensors mit Hilfe eines Heizwiderstandes (500), der auf dem Träger (1) derart angeordnet ist, dass eine vollständige Verbrennung der Ablagerung an rein ohmschem Material gewährleistet ist, umfasst.

11. Verfahren zum Dimensionieren einer Vorrichtung zum Erfassen einer Schwellendicke ($e_s$) einer Schicht (3) aus rein ohmschem Material, die auf Elektroden der Vorrichtung abgelagert ist, um das Verfahren nach einem der Ansprüche 1 bis 10 durchzuführen, **dadurch gekennzeichnet, dass** es die folgenden Schritte umfasst:

α) Ablagern einer gewählten Schwellendicke ($e_s$) eines rein ohmschen Materials auf einem ersten (100) und einem zweiten (200) Paar von Versuchselektroden, die mit einer Spannungsquelle (U) verbunden und hinsichtlich eines ersten Parameters aus der Breite und dem Abstand der Elektroden verschieden sind;

β) Messen der Stromstärken oder der Widerstände bei der gewählten Schwellendicke (es) für jedes Paar von Versuchselektroden und Berechnen des Verhältnisses ($I_1/I_2$) der Stromstärken ($I_1, I_2$) oder des Verhältnisses ($R_2/R_1$) der Widerstände ($R_2, R_1$) zwischen den Elektroden jedes Paares;

γ) Herstellen eines Sensors, der zwei Paare von Elektroden umfasst, die hinsichtlich des gleichen ersten Parameters wie die Versuchselektroden und hinsichtlich wenigstens eines zweiten Parameters aus der Länge und der Versorgungsspannung der Elektroden verschieden sind, wobei dieser zweite Parameter hinsichtlich eines Verhältnisses ($I_1/I_2$) der Stromstärken oder des Verhältnisses ($R_2/R_1$) der Widerstände, gemessen zwischen den Paaren von Versuchselektroden bei der Schwellendicke (es) im vorherigen Schritt β) verschieden ist.

12. Verfahren zum Dimensionieren nach Anspruch 11, wobei

- in Schritt α) das erste (100) und das zweite (200) Paar von Versuchselektroden eine erste (101) bzw. eine zweite (201) Breite aufweisen, jedoch hinsichtlich der Länge, des Abstandes und der Versorgungsspannung identisch sind;
- in Schritt γ) ein Sensor hergestellt wird, der zwei Paar von Elektroden umfasst, die die gleichen ersten (101) und zweiten (201) Breiten wie diejenigen der Versuchselektroden und identische Abstände aufweisen und bei denen das Verhältnis ($L_3/L_1$) zwischen der Länge ($L_3, L_1$) der Elektroden (200a, 200b, 100a, 100b) des zweiten (200) und des ersten Paares oder das Verhältnis ($U_{200}/U, U/U_{100}$) zwischen der im Betrieb an die Klemmen der Elektroden (200a, 200b, 100a, 100b) des zweiten (200) und des ersten (100) Paares angelegten Spannung ($U, U_{200}, U_{10}0$) gleich dem Verhältnis der Stromstärken ($I_1/I_2$) oder der Widerstände ($R_2/R_1$), gemessen zwischen den Paaren von Versuchselektroden bei der gewählten Schwellendicke (es) im vorherigen Schritt β) ist.

13. Verfahren zum Dimensionieren nach Anspruch 11, wobei

- in Schritt α) das erste (100) und zweite (200) Paare von Versuchselektroden einen ersten (101) bzw. einen zweiten (201) Abstand aufweisen, jedoch hinsichtlich der Länge, der Breite und der Versorgungsspannung identisch sind;
- in Schritt γ) ein Sensor hergestellt wird; der zwei Paare von Elektroden umfasst, die die gleichen ersten (101) und zweiten (201) Abstände wie diejenigen der Versuchselektroden und identische Längen aufweisen, und bei denen das Verhältnis ($L_3/L_1$) zwischen der Länge ($L_3$, $L_1$) der Elektroden (200a, 200b, 100a, 100b) des zweiten (200) und des ersten Paares oder das Verhältnis ($U_20 0/U$, $U/U_{100}$) zwischen der im Betrieb an die Klemmen der Elektroden (200a, 200b, 100a, 100b) des zweiten (200) und des ersten (100) Paares angelegten Spannung ($U$, $U_{200}$, $U_{100}$) gleich dem Verhältnis der Stromstärken ($I_1/I_2$) oder der Widerstände ($R_2/R_1$), gemessen zwischen den Paaren von Versuchselektroden bei der gewählten Schwellendicke (es) im vorherigen Schritt β) ist.

**14.** Verfahren zum Dimensionieren nach Anspruch 11, wobei:

- in Schritt α) das erste (100) und zweite (200) Paar von Versuchselektroden hinsichtlich der Breite und des Abstandes der Elektroden verschieden sind, wobei die Elektroden hinsichtlich der Länge und der Versorgungsspannung ($U$) identisch sind;
- in Schritt γ) ein Sensor hergestellt wird, der zwei Paare von Elektroden umfasst, die die gleichen Längen und Abstände wie die Versuchselektroden aufweisen und bei denen das Verhältnis ($L_3/L_1$) zwischen der Länge ($L_3$, $L_1$) der Elektroden (200a, 200b, 100a, 100b) des zweiten (200) und des ersten Paares oder das Verhältnis ($U_{200}/U$, $U$, $U/U_{100}$) zwischen der im Betrieb an die Klemmen der Elektroden (200a, 200b, 100a, 100b) des zweiten (200) und des ersten Paares angelegten Spannung gleich dem Verhältnis der Stromstärken ($I_1/I_2$) oder der Widerstände ($R_2/R_1$), gemessen zwischen den Versuchselektrodenpaaren bei der gewählten Schwellendicke (es) im vorherigen Schritt β), ist.

**15.** Vorrichtung zum Erfassen einer Schwellendicke (es) einer Schicht (3) aus rein ohmschem Material zur Durchführung des Messverfahrens nach einem der Ansprüche 1 bis 10, mit einem Sensor (10), der wenigstens drei Elektroden (100a, 100b, 200a, 200b) zur Bildung von wenigstens zwei Paaren (100, 200) von Elektroden, die nebeneinander auf einem Träger (1) angeordnet sind, eine Spannungsquelle (2), die mit den Elektroden (100a, 100b, 200a, 200b) verbunden ist und geregelt wird, um eine Spannung an jedes Paar von Elektroden zu liefern, und ein Mittel (103, 203) zum Messen der Widerstände (R1, R2) oder der Stromstärken zwischen den Paaren von Elektroden umfasst, **dadurch gekennzeichnet, dass** sie ferner ein Mittel zum Vergleichen der Widerstände oder der Stromstärken miteinander und ein Mittel zum Erzeugen eines Signals, wenn die gemessenen Widerstände oder Stromstärken gleich sind, umfasst und **dadurch**, dass die Paare von Elektroden wenigstens hinsichtlich eines ersten Parameters aus der Länge und dem Abstand der Elektroden und wenigstens hinsichtlich eines zweiten Parameters aus dem Abstand, der Breite, der Länge und der Regelung der Versorgungsspannungsquelle der Elektroden verschieden sind, wobei im Betrieb der zweite Parameter derart ist, dass die Widerstands- oder Stromstärkengleichheit erreicht wird, wenn die zu erfassende Schwellendicke (es) auf den Elektroden abgeschieden ist.

**16.** Vorrichtung zum Erfassen nach Anspruch 15, wobei eine Länge (101) und/oder ein erster Abstand (102) des ersten Paares (100) von Elektroden (100a, 100b) im Betrieb derart sind, dass die Ableitung des Stromes zwischen den Elektroden (100a, 100b) des ersten Paares nach der Dicke der Schicht (3) mit zunehmender Dicke gegen Null geht, und eine Breite (201) und/oder ein zweiter Abstand (202) des zweiten Paares (200) von Elektroden derart sind, dass im Betrieb der Strom der Elektroden (200a, 200b) des zweiten Paares im Wesentlichen linear mit der Dicke der Schicht zunimmt, wenn die Schwellendicke (es) erreicht ist, wobei die Breiten und/oder die Längen und/oder die Abstände der Elektroden und/oder die Regelung der Versorgungsspannungsquelle so angepasst sind, dass die Widerstands- oder Stromstärkengleichheit erreicht ist, wenn die Schwellendicke (es) erreicht ist.

**17.** Vorrichtung zum Erfassen nach einem der Ansprüche 15 oder 16, wobei eine Abdeckung (305, 405, 450) aus isolierendem Material derart auf den Elektroden angeordnet ist, dass nur auf einer vorbestimmten Elektrodenlänge ein elektrischer Kontakt zu der Schicht aus Widerstandsmaterial besteht.

**18.** Vorrichtung zum Erfassen nach einem der Ansprüche 15 bis 17, wobei die Elektroden parallel, sich überschneidend oder sowohl als auch angeordnet sind.

**19.** Vorrichtung zum Erfassen nach Anspruch 15, die durch das Verfahren zum Dimensionieren nach Anspruch 12 herstellbar ist und zwei Paare von Elektroden, die die gleiche erste (101) bzw. zweite (201) Breite wie diejenigen der Versuchselektroden und identische Abstände aufweisen, umfasst und bei denen das Verhältnis ($L_3/L_1$) zwischen der Länge ($L_3$, $L_1$) der Elektroden (200a, 200b, 100a, 100b) des zweiten (200) und des ersten (100) Paares oder

das Verhältnis ($U_{200}$/U, U/$U_{100}$) zwischen der im Betrieb an die Elektroden (200a, 200b, 100a, 100b) des zweiten (200) und des ersten (100) Paares angelegten Spannung (U, $U_{200}$, $U_{100}$) gleich dem Verhältnis des Stromstärken ($I_1$/$I_2$) oder der Widerstände ($R_2$/$R_1$), gemessen zwischen den Versuchselektrodenpaaren bei der in Schritt β) des Verfahrens zum Dimensionieren gemäß Anspruch 12 gewählten Schwellendicke (es), ist.

20. Vorrichtung zum Erfassen nach Anspruch 15, die durch das Verfahren zum Dimensionieren nach Anspruch 13 herstellbar ist und zwei Paare von Elektroden, die den gleichen ersten (101) und zweiten (201) Abstand wie jene der Versuchselektroden und identische Breiten aufweisen, umfasst und in dem das Verhältnis ($L_3$/$L_1$) zwischen der Länge ($L_3$, $L_1$) der Elektroden (200a, 200b, 100a, 100b) des zweiten (200) und des ersten (100) Paares oder das Verhältnis ($U_{200}$/U, U/$U_{100}$) zwischen der im Betrieb an die Klemmen der Elektroden (200a, 200b, 100a, 100b) des zweiten (200) und des ersten (100) Paares angelegten Spannung (U, $U_{200}$, $U_{100}$) gleich dem Verhältnis der Stromstärken ($I_1$/$I_2$) oder der Widerstände ($R_2$/$R_1$), gemessen zwischen den Versuchselektrodenpaaren bei der in Schritt β) des Verfahrens zum Dimensionieren gemäß Anspruch 13 gewählten Schwellendicke (es), ist.

21. Vorrichtung zum Erfassen nach Anspruch 18, die durch das Verfahren zum Dimensionieren nach Anspruch 14 herstellbar ist und zwei Paare von Elektroden, die die gleichen Längen und Abstände wie die Versuchselektroden aufweisen, umfasst, und in der das Verhältnis ($L_3$/$L_1$) zwischen der Länge ($L_3$, $L_1$) der Elektroden (200a, 200b, 100a, 100b) des zweiten (200) und des ersten (100) Paares oder das Verhältnis ($U_{200}$/U, U/$U_{100}$) zwischen der im Betrieb an die Klemmen der Elektroden (200a, 200b, 100a, 100b) des zweiten (200) und des ersten (100) Paares angelegten Spannung gleich dem Verhältnis der Intensitäten ($I_1$/$I_2$) oder der Widerstände ($R_2$/$R_1$), gemessen zwischen den Versuchselektrodenpaaren bei der in Schritt β) des Verfahrens zum Dimensionieren gemäß Anspruch 14 gewählten Schwellendicke (es) ist.

22. Verwendung des Verfahrens zum Messen nach einem der Ansprüche 1 bis 10 zum Erfassen der Ablagerung einer Rußschicht-Schwellendicke in einem Auspufftopf.

23. Verwendung des Verfahrens zum Messen nach einem der Ansprüche 3 bis 10 zum Erfassen der Ablagerung einer Rußschicht-Schwellendicke in einem Auspufftopf, bei der das in Schritt e) erzeugte Signal, wenn der erste und der zweite Widerstand oder die erste oder zweite Stromstärke gleich sind, darin besteht, einen Schritt zur Regeneration eines Partikelfilters zu initiieren.

24. Auspufftopf mit einem Partikelfilter, der wenigstens eine Vorrichtung zum Erfassen gemäß einem der Ansprüche 15 bis 21 umfasst, der strömungsaufwärts des Partikelfilters angeordnet ist, um das Verfahren zum Messen gemäß einem der Ansprüche 1 bis 10 durchzuführen.

25. Auspufftopf nach dem vorherigen Anspruch, der ferner wenigstens eine Vorrichtung zum Erfassen nach einem der Ansprüche 15 bis 21 umfasst, der strömungsabwärts des Partikelfilters angeordnet ist.o

Fig. 1

Fig. 6

Fig. 2

Fig. 3

Intersection à e=e$_s$=250µm avec $\ell$ = 30µm et $\ell$ = 300µm pour même espacement s=300µm

Fig. 4

Fig. 13

Fig. 5

Intersection à e=es=250µm avec ℓ = s = 50µm et ℓ = s = 500µm

Fig. 5a

Intersection à e=es=250µm avec ℓ = s = 125µm et ℓ = s = 1250µm

Fig. 5b

Fig. 7

Fig. 8

Fig. 9

Fig. 10

Fig. 11

Fig. 12

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4766369 A
- US 5955887 A
- WO 2005124313 A